(19) Europäisches Patentamt
European Patent Office
Office européen des brevets

(11) **EP 1 667 134 B1**

(12) **EUROPEAN PATENT SPECIFICATION**

(45) Date of publication and mention
of the grant of the patent:
**21.07.2010 Bulletin 2010/29**

(51) Int Cl.:
**G11B 7/135** *(2006.01)*    G02B 13/18 *(2006.01)*
G02B 13/00 *(2006.01)*

(21) Application number: **04771895.2**

(22) Date of filing: **19.08.2004**

(86) International application number:
**PCT/JP2004/011934**

(87) International publication number:
**WO 2005/027109 (24.03.2005 Gazette 2005/12)**

(54) **OBJECT LENS, OPTICAL PICKUP AND OPTICAL INFORMATION PROCESSOR**

OBJEKTLINSE, OPTISCHER ABNEHMER UND OPTISCHER INFORMATIONSPROZESSOR

LENTILLE OBJECTIVE, DISPOSITIF DE PRISE DE VUE OPTIQUE ET PROCESSEUR D'INFORMATIONS OPTIQUES

(84) Designated Contracting States:
**DE ES FR GB IT NL**

(30) Priority: **08.09.2003 JP 2003315147**
**01.06.2004 JP 2004163082**

(43) Date of publication of application:
**07.06.2006 Bulletin 2006/23**

(73) Proprietor: **Ricoh Company, Ltd.**
**Tokyo 143-8555 (JP)**

(72) Inventors:
• **HIRAI, Hideaki**
**Yokohama-shi,**
**Kanagawa 226-0026 (JP)**

• **INOUE, Hiroyuki**
**1790085 (JP)**

(74) Representative: **Mounteney, Simon James**
**Marks & Clerk LLP**
**90 Long Acre**
**London**
**WC2E 9RA (GB)**

(56) References cited:
EP-A- 1 209 669       WO-A1-01/13369
JP-A- 2002 107 617    JP-A- 2003 279 851
JP-A- 2003 279 851    US-A1- 2004 190 400
US-B1- 6 490 100

**Description**

TECHNICAL FIELD

The present invention generally relates to an objective lens, an optical pickup, and an optical information processing apparatus.

BACKGROUND ART

In recent years and continuing, optical recording media such as a CD having a recording capacity of 0.65 GB or a DVD having a recording capacity of 4.7 GB are widely used for storing visual information, audio information, and data stored in a computer. Furthermore, the demand for improving and increasing recording density is growing.

As for ways to increase recording density of an optical recording medium, in an optical pickup serving to write/ access information in the optical recording medium, it is effective to increase the size of the numerical aperture (NA) of its objective lens or to shorten the wavelength of its light source for reducing the diameter of the beam spot that is formed on the optical recording medium by condensing light via the objective lens.

Accordingly, while a CD type optical recording medium is applied with an objective lens of a numerical aperture 0.45 to 0.50 and a light source having a wavelength of approximately 785 nm, a DVD type optical recording medium having a greater recording density than the CD type optical recording medium is applied with an objective lens of a numerical aperture of 0.60 to 0.65 and a light source having a wavelength of approximately 660 nm. Thus, there is a desire to further improve and increase the recording density of the optical recording medium. In order to do so, it is desired to further increase the numerical aperture of the objective lens to a size greater than 0.65 or further shorten the wavelength of the light source to a length less than 660 nm.

Although new standards have been, in recent years, proposed in response to the increasing of NA or the shortening of wavelength, the consumers still own conventional optical recording media such as CDs and DVDs. It is therefore desired for the conventional optical recording media and the new optical recording media to be handled by the same optical information processing apparatus.

For example, as shown in Japanese Laid-Open Patent Application No.2002-107617 (hereinafter referred to as "Patent Document 1", the simplest method is to mount a conventional optical pickup and an optical pickup applicable to the new standard. It is, however, difficult to achieve size reduction and cost reduction with this method.

US 6,490,100 discloses an objective lens for an optical disk which focuses a light beam from a light source, is designed so that the third-order coma aberration generated when the objective lens is inclined at a unit Angle is larger than a third-order coma aberration generated when the optical disk is inclined at the unit angle.

DISCLOSURE OF INVENTION

[PROBLEM TO BE SOLVED BY THE INVENTION]

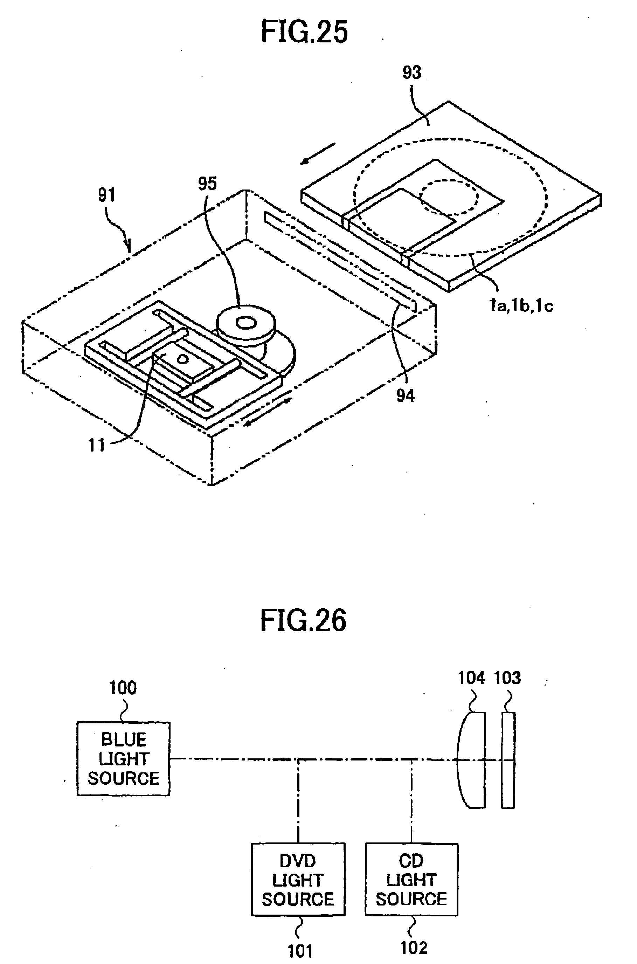

Accordingly, in order to achieve size reduction and cost reduction, there is an optical pickup that is compatible with blue type (large capacity) optical recording media using a light source of a blue wavelength band and with conventional CDs and DVDs. As shown in Fig.26, it is desired for the optical pickup to have a configuration including a blue light source 100, a DVD light source 101, and a CD light source 102 each of a different wavelength, and a single objective lens 104 for condensing and irradiating the light beams irradiated from the light sources 100, 101, and 102 onto corresponding predetermined optical recording media 103.

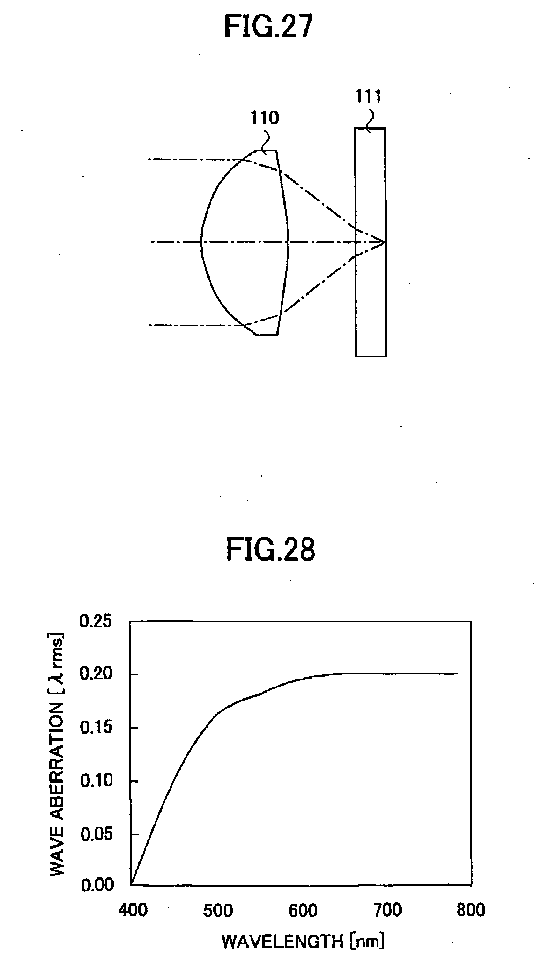

However, in order for the single objective lens 104 to condense light beams to optical recording media of different standards (blue type, DVD, CD), the single objective lens 104 faces the following problem due to differences in applicable wavelength/substrate thickness of the optical recording media 103. That is, in Patent Document 1, Fig.28 shows the amount of aberration generated in a case where an objective lens 110 designed with a light source wavelength of 405 nm (as shown in Fig. 27) is used in a wavelength range of 400 to 800 nm. Reference numeral 111 indicates an optical recording medium. As described below, although wave aberration is, in general, desired to be approximately 0.07 λ rms, Fig.28 shows a wave aberration of 0.20 λ rms or more in the vicinity of wavelengths 660 nm, and 785 nm used for DVD type media and CD type media, respectively.

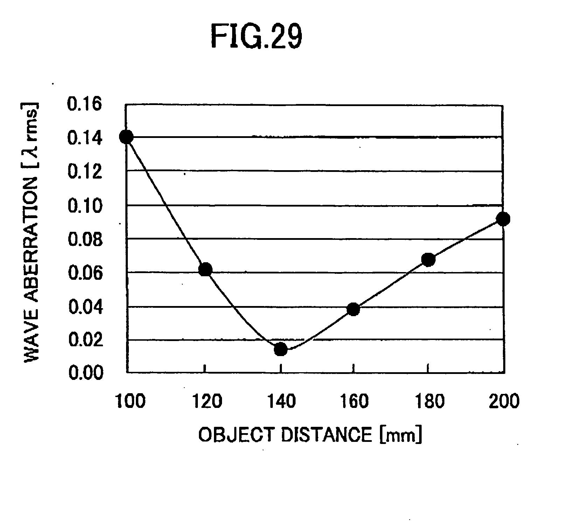

Fig.29 shows the relationship between object distance and wave aberration for the objective lens 110 of Fig. 27 in a wavelength of 660 nm. The position to be selected is the object distance of 142 mm at which the wave aberration is lowest.

As for other problems, increasing the numerical aperture of the objective lens or shortening the wavelength of the light source leads to a problem of coma aberration created by the tilt (inclination) of the optical recording medium. A normal recording/ reproduction operation cannot be performed since the spot formed on the information recording surface of the optical recording medium degrades when coma aberration occurs. The coma aberration caused by the tilt of the optical recording medium is typically obtained by the following formula.

$$W_{31} = ((n^2 - 1) / (2n^3)) \times (d \times NA^3 \times \theta / \lambda)$$

Here, "n" indicates the refractive index of a transparent substrate of an optical recording medium, "d" indicates the thickness of the transparent substrate, "NA" indicates the numerical aperture of an objective lens, "$\lambda$" indicates the wavelength of a light source, and "$\theta$" indicates the amount of tilt of the optical recording medium. From this formula, it can be understood that aberration becomes greater the shorter the wavelength and the greater the numerical aperture (NA) .

Conventionally, in order to correct the light beam aberration caused by the tilt of the optical recording medium, the optical pickup or the carriage part for moving the optical pickup are tilted so as to keep the optical axis of the optical pickup substantially perpendicular to the optical recording medium. Therefore, what is actually subject to the optical correction is the tilt of the optical recording medium. In a case where the tilt of the optical recording medium is optically corrected by tilting the optical pickup or the carriage part for moving the optical pickup, there are difficult problems such as insufficient responsiveness to tilt correction movement and difficulty in tilting the optical pickup or the carriage at a high speed owing to the fact that the object subjected to tilting is large and heavy. Furthermore, since a mechanism for tilting the optical pickup or the carriage is required, the optical pickup or the carriage tends to become heavy, to thereby make it difficult to achieve high speed access.

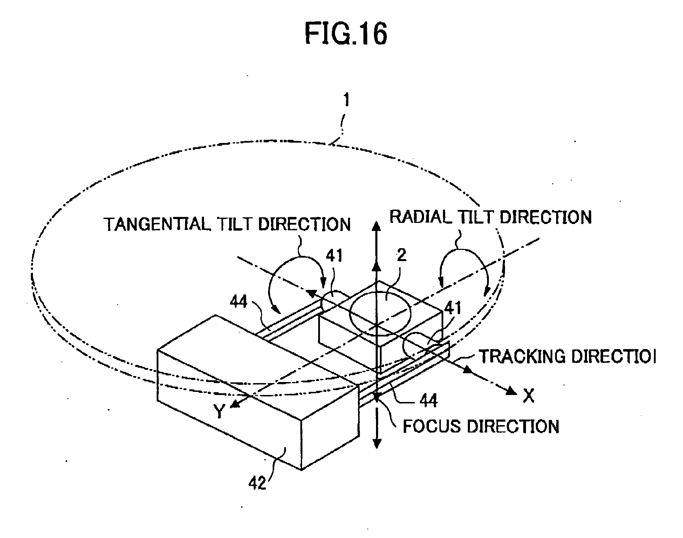

Therefore, in order to solve these problems, a method of correcting the tilt of only the objective lens is proposed. This tilt correcting method is illustrated in Fig.16 and is described more specifically below.

In order to solve the above-described problem of coma aberration caused by shortening the wavelength or increasing the NA for attaining greater recording capacity, a configuration which includes a lens tilt actuator and uses a finite optical system as the optical system for conventional media for attaining compatibility between optical recording media having large recording capacity and the conventional optical recording media. The CD generation did not use the tilt correction mechanism and allowed coma aberration. The DVD generation, however, typically is mounted with the tilt correction mechanism.

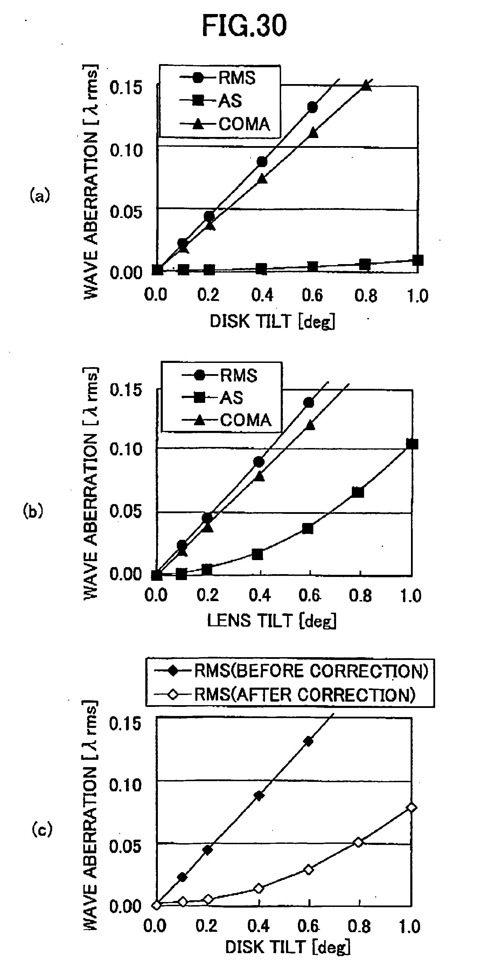

Furthermore, the objective lens of an optical disk apparatus is designed to prevent coma aberration out of its axis by correcting the sine conditions. With such designed objective lens, the coma aberration created when the optical recording medium is tilted with respect to the incident light beams is substantially the same as the coma aberration created when the objective lens itself is tilted with respect to the incident light beams. Figs.30 (a) and 30 (b) show coma aberration generated in a case where the objective lens 110 shown in Fig.27 is tilted and a case where the optical recording medium 111 shown in Fig.27 is tilted. In the cases shown in Figs.30(a) and 30(b), the coma aberration can be cancelled by arranging the optical recording medium 111 and the objective lens 110 in parallel. Such a case is shown in Fig.30(c) .

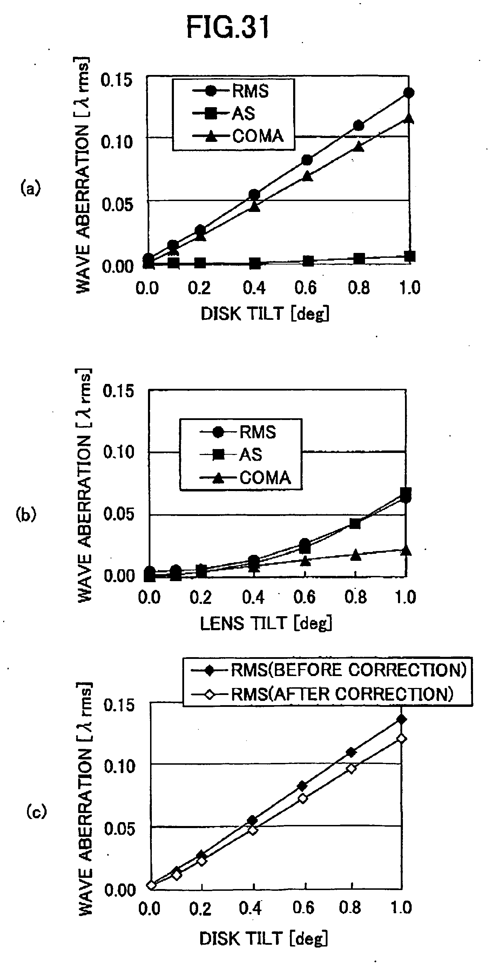

However, coma aberration cannot be cancelled in a case of using such objective lens 110 with a DVD type medium with the finite optical system. Figs. 31(a) and 31(b) show coma aberration generated in a case of tilting an objective lens and tilting an optical recording medium when the objective lens is designed for correcting sine conditions for a blue type medium in a finite optical system. It can be understood from Fig.31(b) that no coma aberration occurs even when the objective lens 110 is tilted. In this case, there is a problem in that the coma aberration caused by the tilting of the optical recording medium 111 of 31 (b) cannot be corrected no matter how the objective lens 110 is moved. This case is shown in Fig.31 (b).

Hence, it is an object of the present invention to attain a satisfactory beam spot characteristic with respect to any type of optical recording medium in a case where coma aberration is corrected by driving the tilt of the lens with respect to the applicable wavelength or the substrate thickness of various optical recording media.

[MEANS FOR SOLVING PROBLEM]

The present invention is defined in claim 1.

In the present invention, although the optical information processing apparatus is mainly used for performing recording/reproduction on optical recording media for three generations of blue/DVD/CD, two generations of blue/DVD, or two generations of blue/CD, the optical information processing apparatus is desired to achieve a wave aberration of 0.07 $\lambda$ rms or less (referred to as Marechal criterion) for each wavelength for attaining a satisfactory spot characteristics even when the optical recording medium is tilted. Although the amount of tilt which may actually occur depends on the type of the optical recording medium, the tilt amount is anticipated to be approximately 0.5 degrees for a blue type optical recording medium, approximately 0.6 degrees for a CD type optical recording medium, and approximately 0.9 degrees for a CD type optical recording medium.

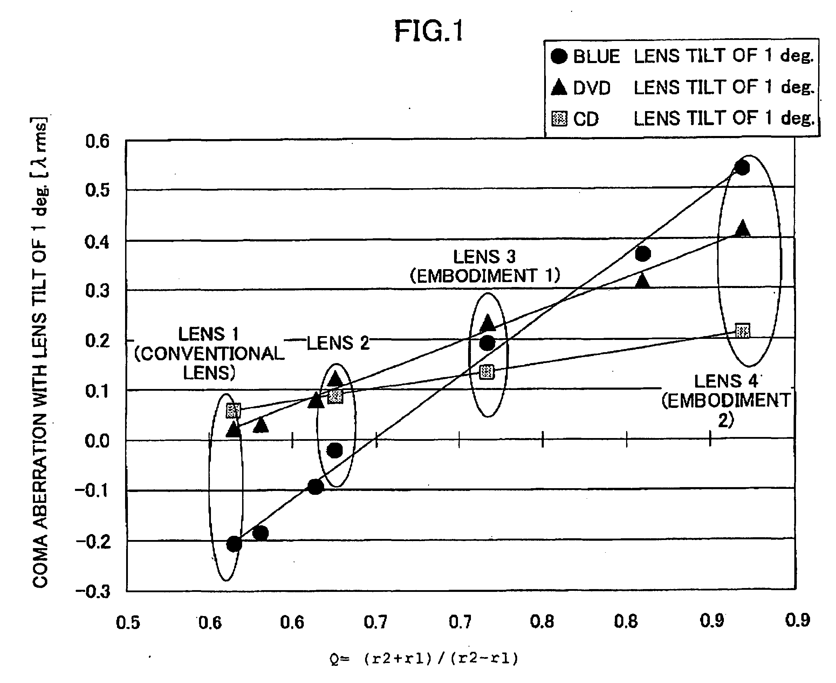

Fig.1 shows coma aberration generated from objective lenses corresponding to a blue disk, a DVD, and a CD in a case where the objective lenses are tilted 1 degree; the material of the lens has a refractive index nd that is 1.50 and an Abbe number vd that is 60; the blue disk optical system has a substrate thickness that is 0.6 mm, a numerical aperture NA that is 0.65, and an applied wavelength that is 405 nm; the DVD optical system has a substrate thickness that is 0.6 mm, a numerical aperture NA that is 0.65, and an applied wavelength that is 660 nm; the CD optical system has a substrate thickness that is 1.2 mm, a numerical aperture NA that is 0.50, and an applied wavelength that is 785 nm; and the objective lenses are different with respect to

$$Q = (r2+r1)/(r2-r1)$$

where r2 is the radius of curvature of the second surface of the objective lens and r1 is the radius of curvature of the first surface of the objective lens.

In Fig.1, "lens 1" is the conventional lens shown in Fig.27 with its sine conditions corrected. With respect to "lens 1", it can be understood that no coma aberration occurs even when the lens tilt is 1 degree (almost 0). In this case, as described above, coma aberration of the optical recording medium cannot be cancelled. With respect to "lens 2", no coma aberration occurs for the blue disk (almost 0). Although the coma aberration from the tilt of the DVD type optical recording medium can be removed, the coma aberration from the tilt of the blue type optical recording medium cannot be removed. Meanwhile, with respect to "lens 3" and "lens 4", coma aberration occurs for all three wavelengths. Thereby, the coma aberration created by the tilt of the optical recording medium can be cancelled by the coma aberration from the tilt of the lens. It is to be noted that "lens 3" is further described below in the first embodiment of the present invention (Embodiment 1) and "lens 4" is further described below in the second embodiment of the present invention (Embodiment 2).

The coma aberration occurring when the blue type optical recording medium, the DVD type optical recording medium, and the CD type optical recording medium are respectively tilted 1 degree is approximately 0.22 λ rms, 0.14 λ rms, and 0.09 λ rms. However, the coma aberration from the tilt of the optical recording medium can be corrected if the objective lens satisfies the relationship

$$"|CLx/CDx| \geqq 1",$$

wherein CDx (x=1, 2, 3) is the value of each least square error (λ rms) of the third order coma aberration components generated per angle when the substrate of the optical recording medium is tilted; wherein CLx (x=1,2, 3) is the value of each least square error (λ rms) of the third order coma aberration components generated per angle when the objective lens is tilted during the converging and irradiating to the optical recording medium. The objective lenses according to the present invention satisfy the above-described relationship and are able to achieve tilt correction.

With the present invention, in a case of performing coma aberration correction on optical recording media having various wavelengths and substrate thicknesses by driving the lens tilt, satisfactory spot characteristics can be attained for any one of the optical recording media.

Furthermore, with the present invention, in a case of correcting the coma aberration from disk tilt with respect to optical recording media having various wavelengths and substrate thicknesses by driving the lens tilt, satisfactory spot characteristics can be attained for any one of the optical recording media by using an objective lens satisfying a typical sine condition.

BRIEF DESCRIPTION OF THE DRAWINGS

Fig.1 is a characteristic diagram showing characteristics of the present invention of which coma aberration is generated where the lens tilt of the objective lens is 1 degree;

Fig.2 is an explanatory diagram showing an objective lens according to a first embodiment of the present invention;

Fig.3 is a characteristic diagram showing disk tilt, lens tilt, tilt correction, and lens tilt amount for a blue type optical recording medium according to an embodiment of the present invention;

Fig.4 is a characteristic diagram showing disk tilt, lens tilt, tilt correction, and lens tilt amount for a DVD type optical recording medium according to an embodiment of the present invention;

Fig.5 is a characteristic diagram showing disk tilt, lens tilt, tilt correction, and lens tilt amount for a CD type optical recording medium according to an embodiment of the present invention;

Fig.6 is an explanatory diagram showing an objective lens according to a second embodiment of the present invention;

Fig.7 is a characteristic diagram showing disk tilt, lens tilt, tilt correction, and lens tilt amount for a blue type optical recording medium according to an embodiment of the present invention;

Fig.8 is a characteristic diagram showing disk tilt, lens tilt, tilt correction, and lens tilt amount for a DVD type optical recording medium according to an embodiment of the present invention;

Fig.9 is a characteristic diagram showing disk tilt, lens tilt, tilt correction, and lens tilt amount for a CD type optical recording medium according to an embodiment of the present invention;

Fig.10 is an explanatory diagram showing an objective lens according to a third embodiment of the present invention;

Fig.11 is a characteristic diagram showing disk tilt, lens tilt, tilt correction, and lens tilt amount for a blue type optical recording medium according to an embodiment of the present invention;

Fig.12 is a characteristic diagram showing disk tilt, lens tilt, tilt correction, and lens tilt amount for a DVD type optical recording medium according to an embodiment of the present invention;

Fig.13 is a characteristic diagram showing disk tilt, lens tilt, tilt correction, and lens tilt amount for a CD type optical recording medium according to an embodiment of the present invention;

Fig.14 is a schematic drawing showing an overall configuration of an optical pickup according to a first embodiment of the present invention;

Fig.15 is a schematic drawing showing in detail a configuration of its fixed optical system;

Fig.16 is a schematic perspective view showing an exemplary configuration of its actuator part;

Fig.17 is a schematic drawing showing an exemplary configuration of a tilt detecting optical system; .

Fig.18 is a schematic circuit diagram showing an exemplary configuration of a circuit for computing tilt signals;

Fig.19 is a front view showing an exemplary configuration of an optical detector of a four axis actuator;

Fig.20 is an explanatory drawing showing a relationship between an optical recording medium and an interference region;

Fig.21 is an explanatory drawing showing an interference region;

Fig.22 is an explanatory drawing showing the changes of the interference region in relation with radial tilt;

Fig.23 is an explanatory drawing showing the changes of the interference region in relation with tangential tilt;

Fig.24 is a front view showing an exemplary configuration of a pattern of an optical detector;

Fig.25 a schematic perspective view showing an optical information processing apparatus according to an embodiment of the present invention;

Fig.26 is a block diagram of a typically assumed optical pickup for blue type/DVD/CD compatibility;

Fig.27 is a schematic drawing showing a configuration of a conventional objective lens;

Fig.28 is a characteristic diagram showing a conventional relationship between light source wavelength and wave aberration;

Fig.29 is a characteristic diagram showing disk tilt, lens tilt, and tilt correction for a blue type optical recording medium according to a conventional example;

Fig.30 is a characteristic diagram showing disk tilt, lens tilt, and tilt correction for a DVD type optical recording medium according to a conventional example;

Fig.31 is a characteristic diagram showing disk tilt, lens tilt, and tilt correction for a CD type optical recording medium according to a conventional example;

Fig.32 is a schematic drawing showing a configuration of an optical pickup according to a second embodiment of the present invention;

Fig.33 is a front view showing an exemplary configuration of its hologram unit;

Fig.34 is a characteristic diagram showing disk tilt, lens tilt, and tilt correction in a DVD type infinite system; and

Fig.35 is a schematic drawing showing a configuration of an optical pickup according to,a third embodiment of the present invention.

EXPLANATION OF REFERENCE NUMERALS

| 1 | optical recording medium |
| 2 | objective lens |
| 2A, 2B | single lens |
| 2C | 1 group 2 element bond type objective lens |
| 4 | lens driving apparatus |

| 5 | tilt detecting means |
|---|---|
| 11 | optical pickup |
| 12-14 | light source |
| 200 | optical pickup |
| 201 | light source |
| 207 | aperture element |
| 208 | objective lens |
| 209 | optical recording medium |
| 221a | light source |
| 224 | lens driving apparatus |
| 300 | optical pickup |
| 302a | light source |

## BEST MODE FOR CARRYING OUT THE INVENTION

An objective lens, an optical pickup using the objective lens, and an optical information processing apparatus including the optical pickup according to an embodiment of the present invention are described below. Although compatibility among three generations of a blue type disk/a DVD type disk/a CD type disk is described below, any two of the three generations may be selected, for example, a blue type disk/a DVD type disk or a blue type disk/a CD type disk.

[Embodiment of Objective Lens]

<First Embodiment of Objective Lens>

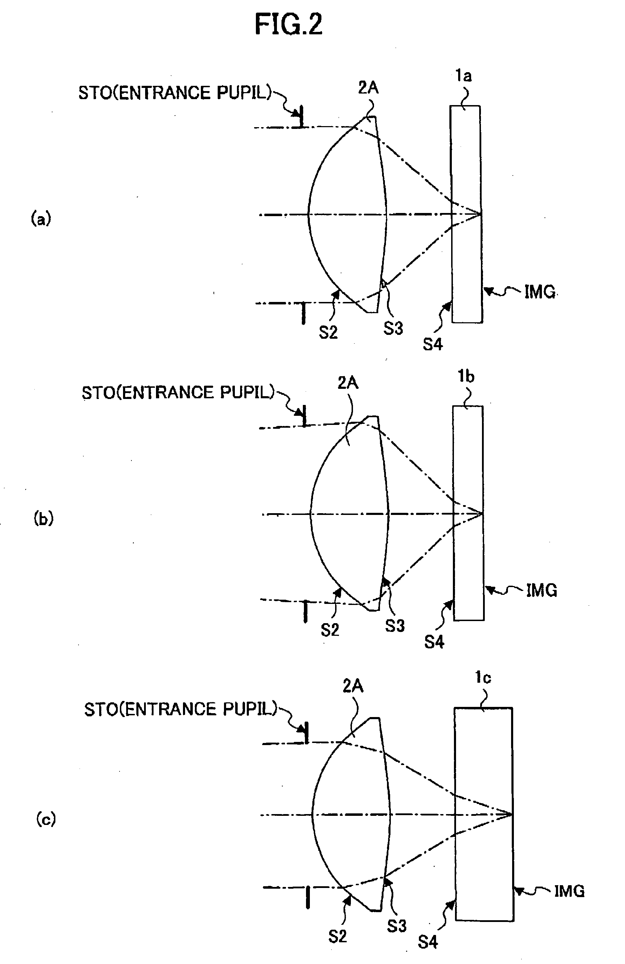

This embodiment is described with reference to Figs 2 to 6. The objective lens of this embodiment is used in an optical pickup for performing a recording process, a reproducing process or an erasing process on three types of optical recording media including a blue type optical recording medium (wavelength ($\lambda$1):405 nm, substrate thickness: 0.6 mm, numerical aperture (NA):0.65), a DVD type optical recording medium (wavelength ($\lambda$2):660 nm, substrate thickness: 0.6 mm, numerical aperture (NA):0.65), and a CD type optical recording medium (wavelength ($\lambda$3) :785 nm, substrate thickness:1.2 mm, numerical aperture (NA) :0.50) .

First, with reference to Fig.2(a) and Table 1(a), the optical performance of an objective lens 2A is described in a case where the objective lens 2A is used on a blue type optical recording medium 1a having a wavelength $\lambda$1 of 405 nm. The objective lens 2A of this embodiment uses a glass material (500000.600000) with a numerical aperture NA of 0.65, a focal length f of 3.05 mm, a d line refractive index nm of 1.50, and an Abbe number vd of 60.

In the objective lens 2A of this embodiment, the aspherical surface of the lens is expressed with the following formula

$$X = (Y^2/R) / [1 + \sqrt{\ } \{1 - (1+K) Y/R^2\}$$

$$+ AY^4 + BY^6 + CY^8 + DY^{10} + EY^{12} + FY^{14} + GY^{16} + HY^{18} + JY^{20} + \cdots,$$

wherein the coordinates in the direction of the optical axis is indicated as "X", the coordinates in the direction perpendicularly intersecting the optical axis is indicated as "Y", the paraxial radius of curvature is indicated as "R", the conical constant is indicated as "K", and the high order coefficients are indicated as "A, B, C, D, E, F, ⋯". The shape of the aspherical surface is defined by applying R, K, A, B, C, D, ⋯.

The specific data is shown in Table 1(a). The reference numbers in the table are as follows. Although "OBJ" indicates the object point (a semiconductor laser as the light source), the objective lens 2A is an infinite system in which its radius of curvature (indicated as "RDY") and its thickness (indicated as "THI") are indicated as "INFINITY" (infinite). Accordingly, this indicates that the light source is situated at a point of infinity. Furthermore, in the entrance pupil plane indicated as "STO", its radius of curvature is indicated as "INFINITY" and its thickness is designed as "0". The unit for expressing the amount having a dimension of length is "mm (millimeters)" unless otherwise indicated.

"S2" indicates the surface of the objective lens 2A situated toward the light source (light source side), and "S3" indicates the surface of the objective lens 2A situated toward the optical recording medium (optical recording medium side). The thickness of the objective lens 2A is 1.85 mm. In the column for S3, the thickness of 1.694869 mm (on the right of radius of curvature) indicates the working distance. "S4" indicates the surface of the substrate of the optical recording medium 1 situated towards the light source (light source side substrate), and "IMG" indicates the surface

**EP 1 667 134 B1**

matching the recording surface of the optical recording medium 1. The distance between the surfaces S4 and IMG, that is, the thickness of the light source side substrate is 0.6 mm, and n is 1.62.

"EPD (entrance pupil diameter)" indicates the diameter of the incident light beam (3.965 mm), and "WL (wavelength)" indicates the wavelength being used (405 nm). In expressing the aspherical coefficient, for example, "D:-.222984-04" indicates D=-.222984X10⁻⁴.

Furthermore, the objective lens 2A of this embodiment satisfies the conditions of

$$|CL1/CD1| \gtreqqless 1$$

$$|CL2/CD2| \gtreqqless 1$$

$$|CL3/CD3| \gtreqqless 1,$$

wherein CDx (x=1,2,3) is the value of each least square error (unit: λ rms) of the third order coma aberration components generated per angle when the first, second, and third substrates are tilted, and wherein CLx (x=1,2,3) is the value of each least square error (λ rms) of the third order coma aberration components generated per angle when the objective lens is tilted during the converging and irradiating to the optical recording medium.

Next, a case of applying the objective lens 2A to a DVD type optical recording medium 1b for a wavelength of 660 nm is described with reference to Fig.2(b) and table 1(b). Although the shape of the objective lens 2A is the same as the one shown in Fig.2(a) and table 1(a), its refractive index and working distance are different. Furthermore, in a case of the DVD type optical recording medium 1b, the objective lens 2A is used for an incident light beam in a finite system, in which the distance from the object point "OBJ" (a semiconductor laser being the light source) to a single aperture part at the first surface "STO" is 410 mm. This is a value selected so that the wave aberration is minimal.

Next, a case of applying the objective lens 2A to a CD type optical recording medium 1c for a wavelength of 785 nm is described with reference to Fig.2(c) and table 1(c). Although the shape of the objective lens 2A is the same as the one shown in Fig.2(a) and table 1(a), its refractive index, working distance, and the thickness of the light source side substrate are different. Furthermore, in a case of the CD type optical recording medium 1c, the objective lens 2A is used for an incident light beam in a finite system, in which the distance from the object point "OBJ" (a semiconductor laser being the light source) to a single aperture part at the first surface "STO" is 75.0 mm. The same as the case of the DVD type optical recording medium 1b, this is a value selected so that the wave aberration is minimal.

[Table 1]

| (a) LENS DATA WITH WAVELENGTH OF 405nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | INFINITY | |
| STO | INFINITY | 0.0 | |
| S2 | 1.81 | 1.85 | 500000.600000(1.514) |
| | K : -0-657289 A :0.354834E-02 B :0.415933E-03 C :0.593078E-04 D :0.130958E-04 | | |
| S3 | -11 | 1.694869 | |
| | K : -2.376950 A :0.134002E-01 B -226791E-02 C :0.286787E-03 D :-.222984E-04 | | |
| S4 | INFINITY | 0.6 | PC(1.621) |
| IMG | INFINITY | 0.0 | |
| EPD:ENTRANCE PUPIL DIAMETER(mm) | | 3.97 | |

7

(continued)

| (a) LENS DATA WITH WAVELENGTH OF 405nm | | | |
|---|---|---|---|
| SURFACE | RDY(RADIUS OF CURVATURE) | THI(THICKNESS) | GLASS MATERIAL (REFRACTIVE INDEX) |
| WL.WAVELENGTH(nm) | | 405 | |

| (b) LENS DATA WITH WAVELENGTH OF 660nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | 410.0 | |
| STO | INFINITY | 0.0 | |
| S2 | 1.81 | 1.85 | 500000.600000(1.497) |
| S2 | K : -0.657289 A :0.354834E-02 B :0.415933E-03 C :0.593078E-04 D :0.130958E-04 | | |
| S3 | -11 | 1.80273 | |
| S3 | K : -2.376950 A :0.134002E-01 B -226791E-02 C :0.286787E-03 D :-.222984E-04 | | |
| S4 | INFINITY | 0.6 | PC(1.579) |
| IMG | INFINITY | 0.0 | |
| EPD:ENTRANCE PUPIL DIAMETER(mm) | | 4.06 | |
| WL:WAVELENGTH(nm) | | 660 | |

| (c) LENS DATA WITH WAVELENGTH OF 785nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | 75.0 | |
| STO | INFINITY | 0.0 | |
| S2 | 1.81 | 1.85 | 500000.600000(1.494) |
| S2 | K : -0.657289 A :0.354834E-02 B :0.415933E-03 C :0.593076E-04 D :0.130958E-04 | | |
| S3 | -11 | 1.562087 | |
| S3 | K : -2.376950 A :0.134002E-01 B :-.226791E-02 C :0.288787E-03 D :-.222964E-04 | | |
| S4 | INFINITY | 1.2 | PC(1.573) |
| IMG | INFINITY | 0.0 | |
| EPD:ENTRANCE PUPIL DIAMETER(mm) | | 3.28 | |
| WL:WAVELENGTH(nm) | | 785 | |

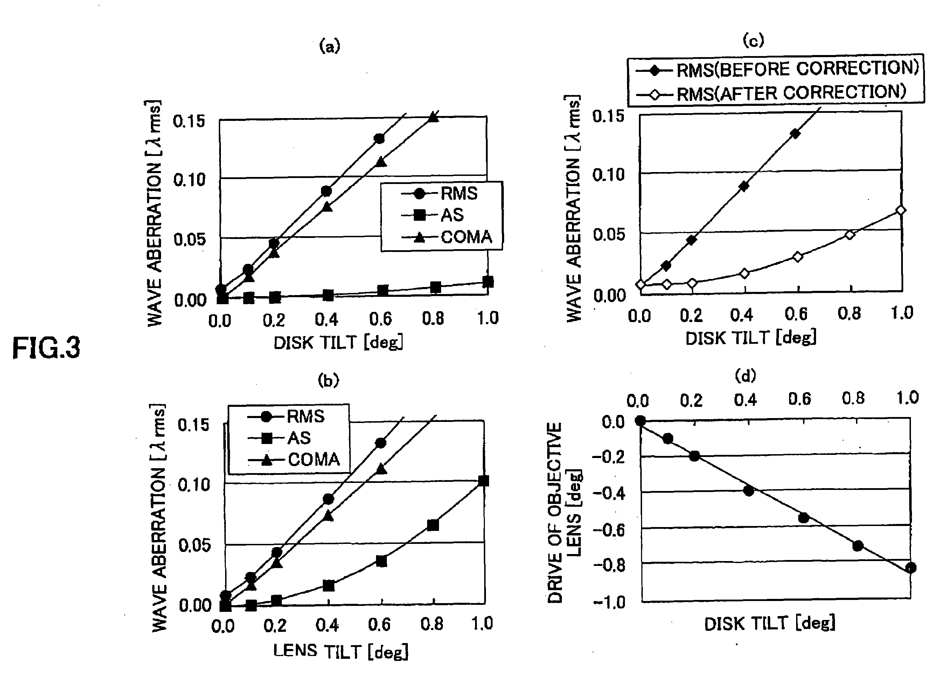

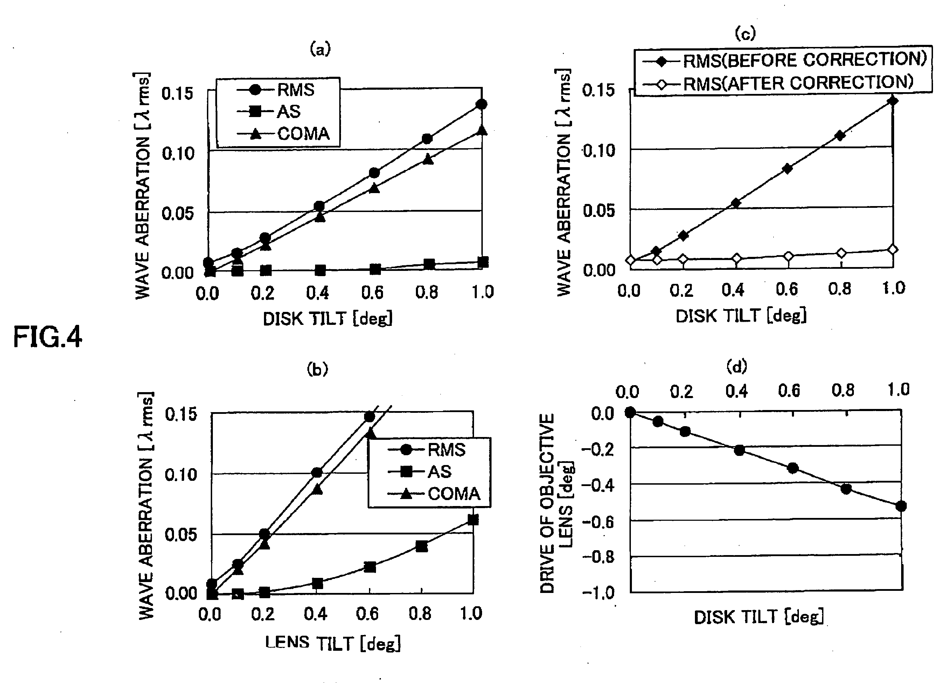

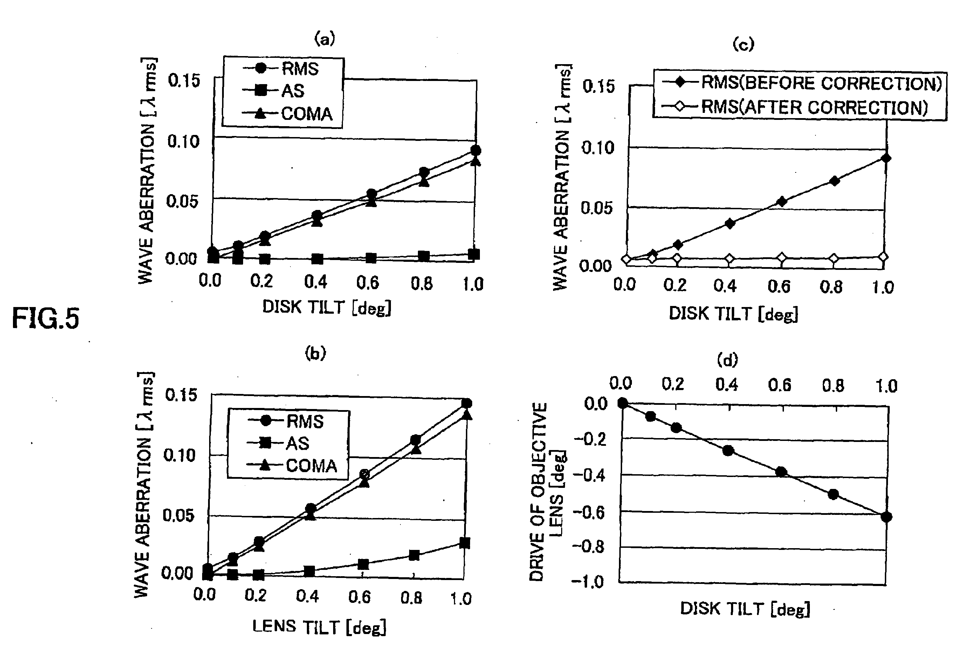

The characteristics of the aberration generated from the tilt of the optical recording medium and the characteristics of the aberration generated from the tilt of the lens are shown in Fig.3(a)(b), Fig.4(a)(b), and Fig.5(a)(b) in a case where the objective lens of this embodiment (Embodiment 1) is used on a blue type optical recording medium, a DVD type optical recording medium, and a CD type optical recording medium with predetermined wavelengths. Fig.3 (c), Fig.4(c), and Fig.5(c) show the characteristics of aberration where the coma aberration from the tilt of the optical recording medium is corrected by lens tilt. This shows that coma aberration can be satisfactorily corrected in any of the wavelengths.

Fig.3(d), Fig.4(d), and Fig. 5(d) show the desired lens drive amount in tilting the objective lens for correcting the tilt of the optical recording medium. For example, in a case where a blue type optical recording medium is tilted one degrees, the objective lens is to be tilted 0.8 degrees in the opposite direction. In a case where a DVD type optical recording medium is tilted one degrees, the objective lens is to be tilted 0.6 degrees. In a case where a CD type optical recording medium is tilted one degrees, the objective lens is to be tilted 0.6 degrees.

<Second Embodiment of the Objective Lens>

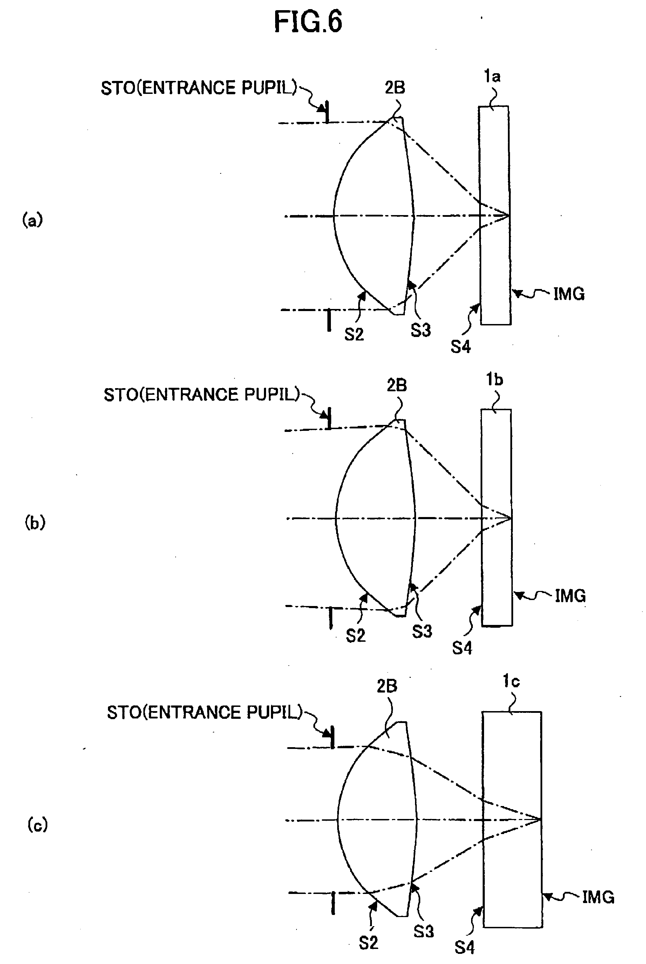

This embodiment is described with reference to Figs.6 to 9. The objective lens 2B of this embodiment is used in an optical pickup for performing a recording process, a reproducing process or an erasing process on three types of optical recording media including a blue type optical recording medium 1a (wavelength ($\lambda$1) :405 nm, substrate thickness: 0.6 mm, numerical aperture (NA):0.70), a DVD type optical recording medium Ib (wavelength ($\lambda$2):660 nm, substrate thickness: 0.6 mm, numerical aperture (NA):0.65), and a CD type optical recording medium 1c (wavelength ($\lambda$3) :785 nm, substrate thickness:1.2 mm, numerical aperture (NA) : 0.50).

The objective lens 2B of this embodiment uses a glass material (550000.600000) with a focal length f of 3.05 mm, a d line refractive index nm of 1.55, and an Abbe number vd of 60. Furthermore, the same as the first embodiment, the objective lens 2B of this embodiment is used in an infinite system in a case of a blue type optical recording medium 1a and is used in a finite system in a case of a DVD type optical recording medium 1b and a CD type optical recording medium 1c.

The configuration of the objective lens 2B used on the blue type optical recording medium 1a is shown in Fig. 6(a) and Table 2(a), the configuration of the objective lens 2B used on the DVD type optical recording medium 1b is shown in Fig.6(b) and Table 2(b), and the configuration of the objective lens 2C used on the CD type optical recording medium 1c is shown in Fig.6(c) and Table 2(c). The aspherical surface of the objective lens 2B and the items shown in Table 2 are the same as those of the first embodiment.

The objective lens 2B of this embodiment also satisfies the conditions of

$$|CL1/CD1| \geqq 1$$

$$|CL2/CD2| \geqq 1$$

$$|CL3/CD3| \geqq 1,$$

wherein CDx (x=1,2,3) is the value of each least square error (unit: $\lambda$ rms) of the third order coma aberration components generated per angle when the first, second, and third substrates are tilted, and wherein CLx (x=1,2,3) is the value of each least square error ($\lambda$ rms) of the third order coma aberration components generated per angle when the objective lens is tilted during the converging and irradiating to the optical recording medium.

[Table 2]

| (a) LENS DATA WITH WAVELENGTH OF 405nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | INFINITY | |
| STO | INFINITY | 0.0 | |
| S2 | 1.7675 | 1.85 | 500000.600000(1.514) |
| | K : -0.646335 A -0.413393E-02 B :0.541612E-03 C :0.568646E-04 D -0.550310E-05 | | |
| S3 | -25.32997 | 1.739096 | |
| | K : 29.405990 A :0.114217E-01 B :-.219145E-02 C :0.390806E-03 D :-.238423E-04 | | |

(continued)

| (a) LENS DATA WITH WAVELENGTH OF 405nm | | | |
|---|---|---|---|
| SURFACE | RDY(RADIUS OF CURVATURE) | THI(THICKNESS) | GLASS MATERIAL (REFRACTIVE INDEX) |
| S4 | INFINITY | 0.6 | PC(1.621) |
| IMG | INFINITY | 0.0 | |
| EPD:ENTRANCE PUPIL DIAMETER(mm) | | 3.965 | |
| WL:WAVELENGTH(nm) | | 405 | |

| (b) LENS DATA WITH WAVELENGTH OF 660nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | 2000 | |
| STO | INFINITY | 0.0 | |
| S2 | 1.7675 | 1.85 | 500000.600000(1.497) |
| | K : -0.646335 A :0.413393E-02 B :0.541612E-03 C :0.568646E-04 D :0.550310E-05 | | |
| S3 | -25.32997 | 1.82994 | |
| | K : 29.405990 A :0.114217E-01 B :-.279145E-02 C :0.390806E-03 D -.238423E-04 | | |
| S4 | INFINITY | 0.6 | PC(1.579) |
| IMG | INFINITY | 0.0 | |
| EPD:ENTRANCE PUPIL DIAMETER(mm) | | 4.060 | |
| WL WAVELENGTH(nm) | | 660 | |

| (c) LENS DATA WITH WAVELENGTH OF 785nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | 123.0 | |
| STO | INFINITY | 0.0 | |
| S2 | 1.7675 | 1.85 | 500000.600000(1.494) |
| | K : -0.646335 A :0.413393E-02 B :0.541612E-03 C :0.568646E-04 D :0.550310E-05 | | |
| S3 | -25.32997 | 1.557836 | |
| | K : 29.405990 A :0.114217E-01 B :-.279145E-02 C :0.390806E-03 D :-.238423E-04 | | |
| S4 | INFINITY | 1.2 | PC(1.573) |
| IMG | INFINITY | 0.0 | |
| EPD:ENTRANCE PUPIL DIAMETER(mm) | | 329 | |
| WL:WAVELENGTH(nm) | | 785 | |

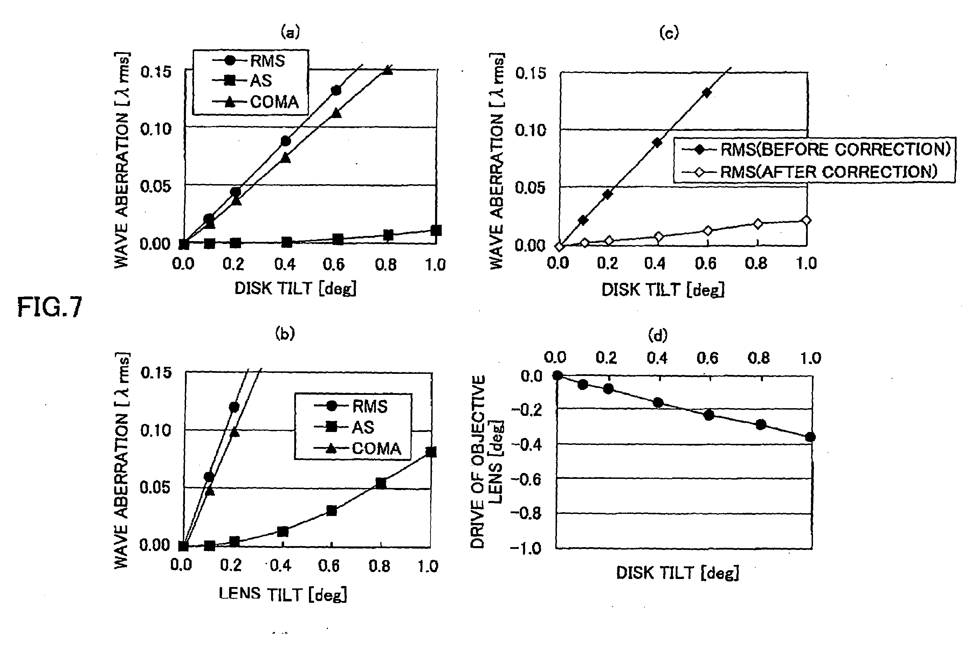

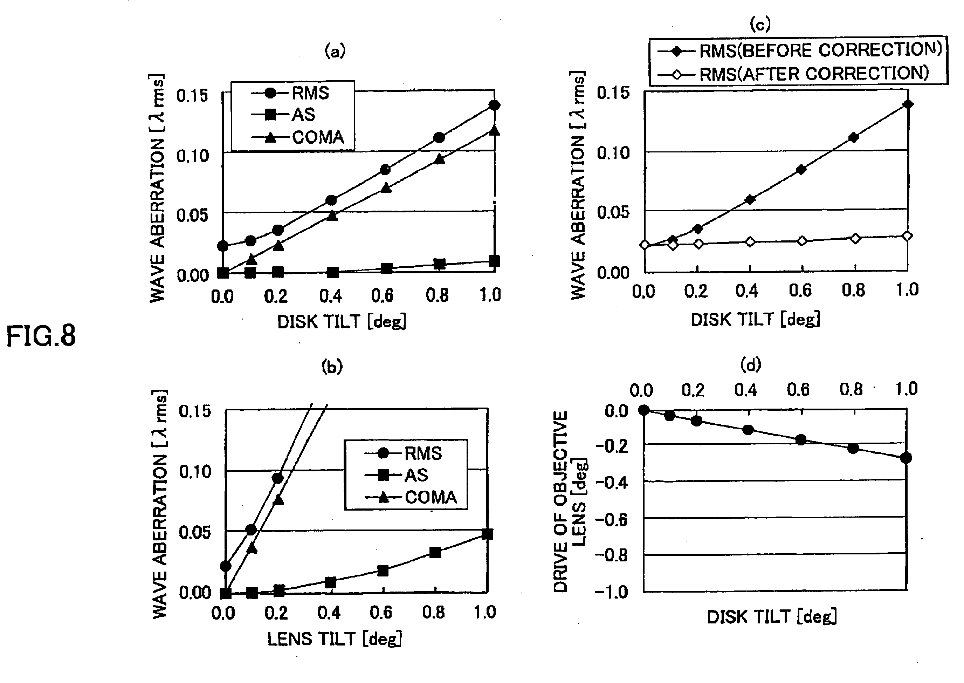

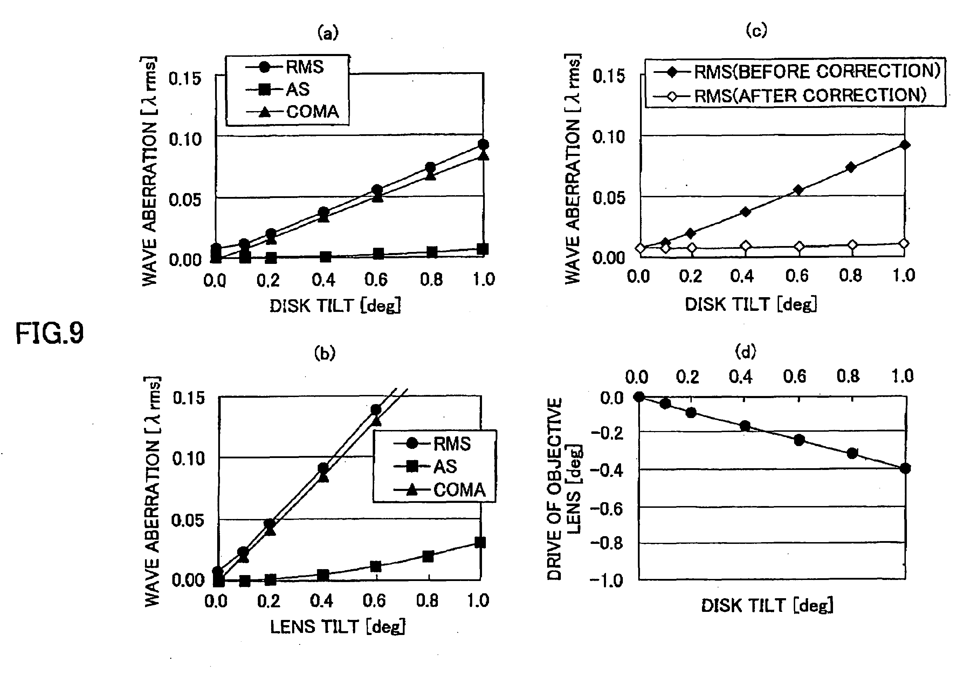

The characteristics of the aberration generated from the tilt of the lens and the characteristics of the aberration generated from the tilt of the optical recording medium are shown in Fig. 7(a) (b), Fig. 8 (a) (b), and Fig.9 (a) (b) in a case where the objective lens of this embodiment (Embodiment 2) is used on a blue type optical recording medium, a DVD type optical recording medium, and a CD type optical recording medium with predetermined wavelengths. Fig.7(c), Fig.8(c), and Fig.9(c) show the characteristics of aberration where the coma aberration from the tilt of the optical recording medium is corrected by lens tilt. This shows that coma aberration is satisfactorily corrected in any of the wavelengths. Fig.7(d), Fig.8(d), and Fig.9(d) show the desired lens drive amount in tilting the objective lens for correcting the tilt of the optical recording medium.

<Third Embodiment of the Objective Lens>

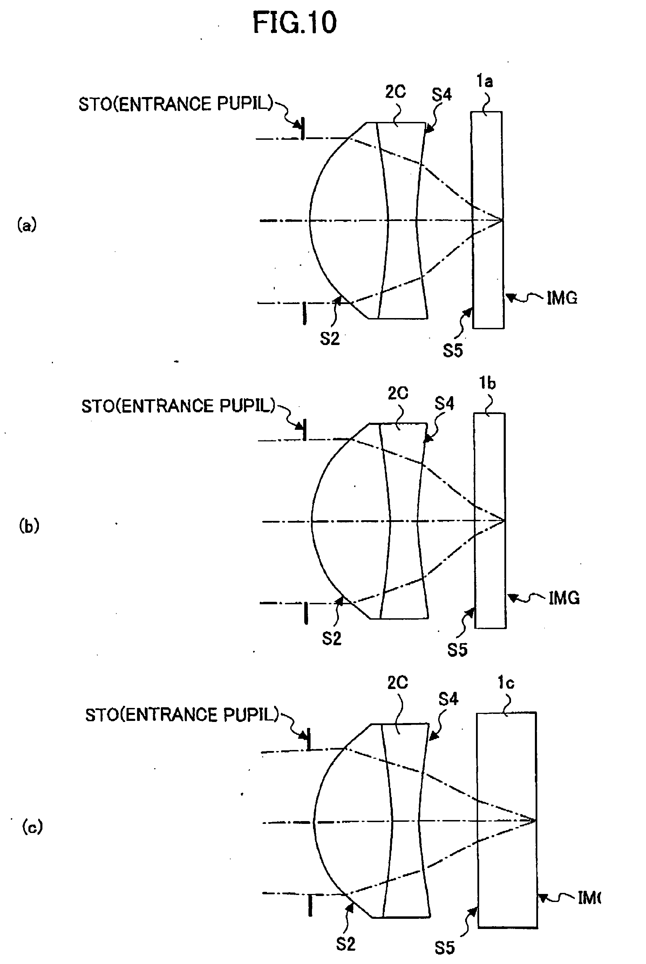

This embodiment is described with reference to Figs.10 to 13. The objective lens 2C of this embodiment is used in an optical pickup for performing a recording process, a reproducing process or an erasing process on three types of optical recording media including a blue type optical recording medium 1a (wavelength (λ1) :405 nm, substrate thickness: 0.6 mm, numerical aperture (NA):0.65), a DVD type optical recording medium 1b (wavelength (λ2):660 nm, substrate thickness: 0.6 mm, numerical aperture (NA):0.65), and a CD type optical recording medium 1c (wavelength (λ3):785 nm, substrate thickness:1.2 mm, numerical aperture (NA):0.50).

The objective lens 2C of this embodiment is different from the objective lenses 2A, 2B of the first and second embodiments in that the objective lens 2C employs a one group two element configuration instead of a single element configuration. It is generally known that chromatic aberration can be corrected by applying together a lens having a positive refractive index and a lens having a negative refractive index. In this embodiment, chromatic aberration from the blue wavelength band to the red wavelength band is corrected.

The objective lens 2C of this embodiment has a glass material LAC 8 (manufactured by HOYA corporation) adhered to its light source side and a glass material EFD 8 (manufactured by HOYA corporation) adhered to its optical recording medium side has a focal length f of 2.5 mm. Furthermore, the same as the first embodiment, the objective lens 2C of this embodiment is used in an infinite system in a case of a blue type optical recording medium 1a and is used in a finite system in a case of a DVD type optical recording medium 1b and a CD type optical recording medium 1c.

The configuration of the objective lens 2C used on the blue type optical recording medium 1a is shown in Fig. 10(a) and Table 3(a), the configuration of the objective lens 2C used on the DVD type optical recording medium 1b is shown in Fig.10(b) and Table 3(b), and the configuration of the objective lens 2C used on the CD type optical recording medium 1c is shown in Fig.10(c) and Table 3(c). The aspherical surface of the objective lens 2C and the items shown in Table 3 are the same as those of the first embodiment.

The objective lens 2C of this embodiment also satisfies the conditions of

$$|CL1/CD1| \geqq 1$$

$$|CL2/CD2| \geqq 1$$

$$|CL3/CD3| \geqq 1,$$

wherein CDx (x=1,2,3) is the value of each least square error (unit: λ rms) of the third order coma aberration components generated per angle when the first, second, and third substrates are tilted, and wherein CLx (x=1,2,3) is the value of each least square error (λ rms) of the third order coma aberration components generated per angle when the objective lens is tilted during the converging and irradiating to the optical recording medium.

[Table 3]

| (a) LENS DATA WITH WAVELENGTH OF 405nm | | | |
|---|---|---|---|
| SURFACE | RDY(RADIUS OF CURVATURE) | THI(THICKNESS) | GLASS MATERIAL (REFRACTIVE INDEX) |
| OBJ | INFINITY | INFINITY | |
| STO | INFINITY | 0.0 | |

(continued)

**(a) LENS DATA WITH WAVELENGTH OF 405nm**

| SURFACE | RDY(RADIUS OF CURVATURE) | THI(THICKNESS) | GLASS MATERIAL (REFRACTIVE INDEX) |
|---|---|---|---|
| S2 | 1.89755 | 1.50 | LA C8_HOYA(1.735) |
| | K : -0.631030<br>A :0.446405E-02 B :0.535004E-03 C :0.973753E-04 D :0.735799E-05 | | |
| S3 | -30 | 0.50 | EFD8_HOYA(1.729) |
| S4 | -53.32552 | 1.651193 | |
| | K : -7019.412829<br>A :0.175339E-01 B -356736E-02 C :0.746709E-04 D :0.535324E-04 | | |
| S5 | INFINITY | 0.6 | PC(1.621) |
| IMG | INFINITY | 0.0 | |
| EPD:ENTRANCE PUPIL DIAMETER(mm) | | 3.290 | |
| WL:WAVELENGTH(nm) | | 405 | |

**(b) LENS DATA WITH WAVELENGTH OF 660nm**

| SURFACE | RDY(RADIUS OF CURVATURE) | THI(TNICKNESS) | GLASS MATERIAL (REFRACTIVE INDEX) |
|---|---|---|---|
| OBJ | INFINITY | INFINITY | |
| STO | INFINITY | 0.0 | |
| S2 | 1.89755 | 1.50 | LAC8_HOYA(1.709) |
| | K : -0.631030<br>A :0.446405E-02 B :0.535004E-03 C :0.973753E-04 D :0.735799E-05 | | |
| S3 | -30 | 0.50 | EFD8_HOYA(1.682) |
| S4 | -53.32552 | 1.651193 | |
| | K: -7019.412829<br>A :0.175339E-01 B :-.356736E-02 C :0.746709E-04 D :0.535324E-04 | | |
| S5 | INFINITY | 0.6 | PC(1.5789) |
| IMG | INFINITY | 0.0 | |
| EPD:ENTRANCE PUPIL DIAMETER(mm) | | 3.409 | |
| WL:WAVELENGTH(nm) | | 660 | |

**(c) LENS DATA WITH WAVELENGTH OF 785nm**

| SURFACE | RDY(RADIUS OF CURVATURE) | THI(THICKNESS) | GLASS MATERIAL (REFRACTIVE INDEX) |
|---|---|---|---|
| OBJ | INFINITY | 41.8 | |
| STO | INFINITY | 0.0 | |
| S2 | 1.89755 | 1.50 | LAC8_HOYA(1.704) |
| | K : -0.631030<br>A :0.446405E-02 B :0.535004E-03 C :0.973753E-04 D :0.735799E-05 | | |
| S3 | -30 | 0.50 | EFD8_HOYA(1-675) |

(continued)

| (c) LENS DATA WITH WAVELENGTH OF 785nm | | | |
|---|---|---|---|
| SURFACE | RDY(RADIUS OF CURVATURE) | THI(THICKNESS) | GLASS MATERIAL (REFRACTIVE INDEX) |
| S4 | -53.32552 | 1.651193 | |
| | K : -7019.412829<br>A :0.175339E-01 B :-.356736E-02 C D.746709E-04 D :0.535324E-04 | | |
| S5 | INFINITY | 1.2 | PC(1.573) |
| IMG | INFINITY | 0.0 | |
| EPD:ENTRANCE PUPIL DIAMETER(mm) | | 2.76 | |
| WL WAVELENGTH(nm) | | 785 | |

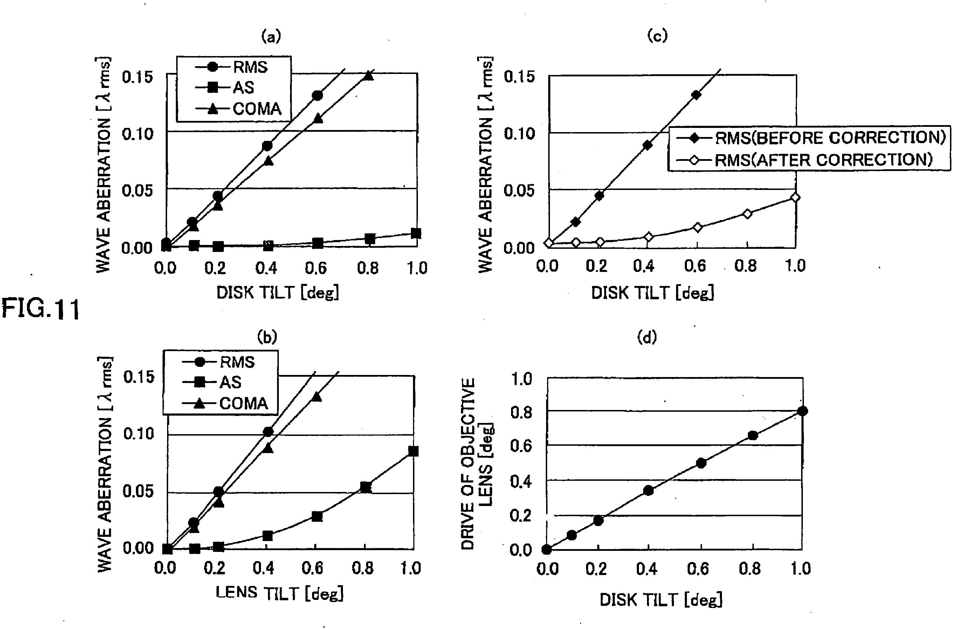

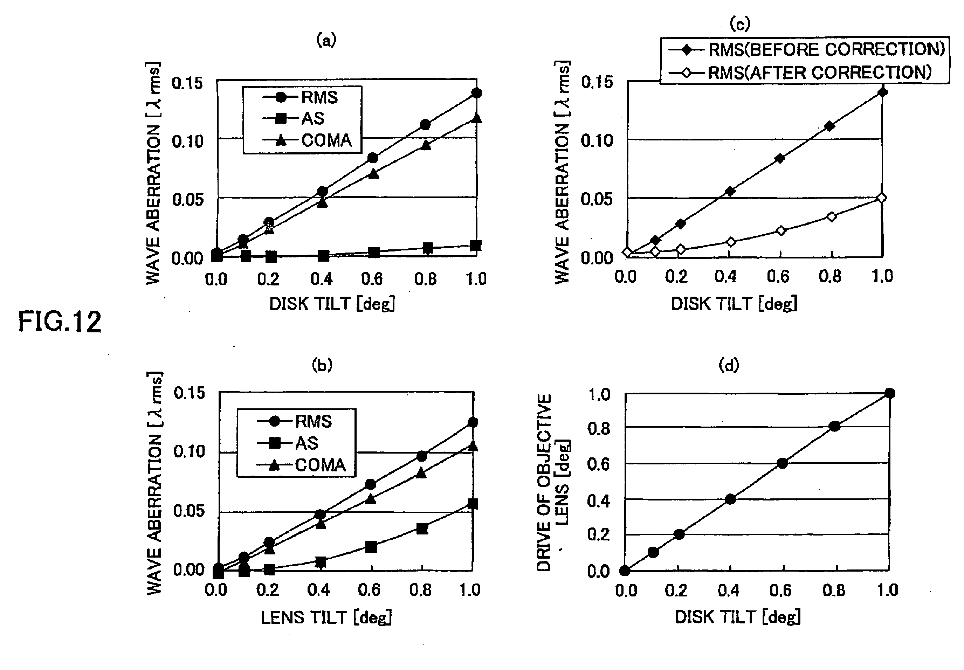

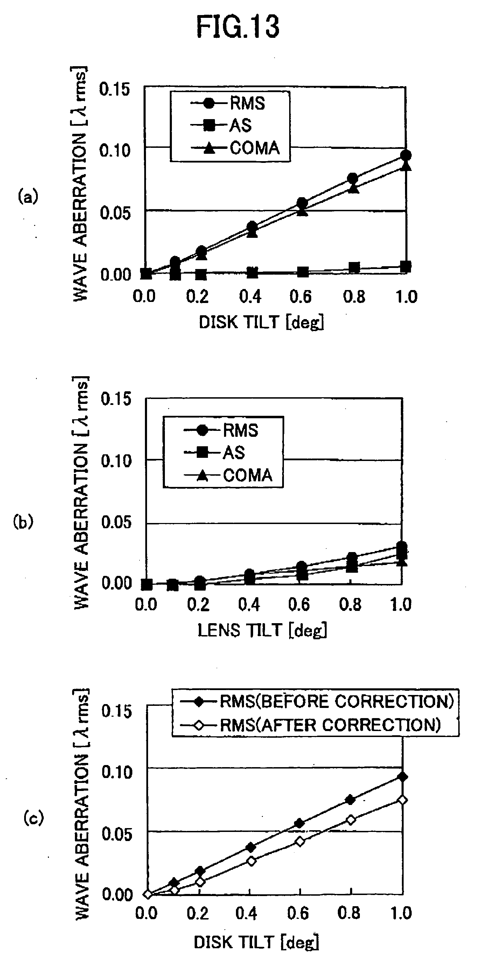

The characteristics of the aberration generated from the tilt of the lens and the characteristics of the aberration generated from the tilt of the optical recording medium are shown in Fig. 11(a)(b), Fig. 12 (a)(b), and Fig. 13 (a)(b) in a case where the objective lens of this embodiment (Embodiment 3) is used on a blue type optical recording medium, a DVD type optical recording medium, and a CD type optical recording medium with predetermined wavelengths. Fig.11 (c), Fig.12(c), and Fig.13(c) show the characteristics of aberration where the coma aberration from the tilt of the optical recording medium is corrected by lens tilt. This shows that coma aberration is satisfactorily corrected for the blue type optical recording medium and the DVD type optical recording medium. However, the correcting effect can hardly be obtained for the CD type optical recording medium. However, the correction effect the same as the blue type optical recording medium and the DVD type optical recording medium may not have to be obtained since the CD generation disk is subject to only a small amount of coma aberration from the tilt of the optical recording medium since it has low NA and a long wavelength. Fig.11(d) and Fig.12(d) show the desired lens drive amount in tilting the objective lens for correcting the tilt of the optical recording medium. Meanwhile, since the coma aberration cannot be corrected by tilting the lens for the CD type optical recording medium, the objective lens may be fixed to a predetermined position rather than being tilted with respect to a . CD type optical recording medium.

<Combined use with another coma aberration correcting element>

It is to be noted that another coma aberration correcting element (phase correction element) may be used in combination with respect to a coma aberration (as shown in Fig.13(c)) which cannot be corrected by lens tilt (|CLx/CDx|«1). For example, in a case of using liquid crystal as the phase correction element with respect to a light source that cannot be corrected by lens tilt, the lens tilt has its position maintained when the light source is lit, and the coma aberration generated by the tilt of the optical recording medium is applied with an opposite polarity by the liquid crystal.

<Footnotes regarding objective lens>

Although the first and second embodiments (Embodiments 1 and 2) describe a single element objective lens having aspherical surfaces on both sides and the third embodiment (Embodiment 3) describes a two element objective lens having aspherical surfaces on both sides, the objective lens.may also use an aspherical surface only on one of its sides. Furthermore, a diffraction plane or a phase difference plane may be provided on the surface of the objective lens. This allows the performance of the objective lens to be attained more easily since the degree of design freedom is increased. The diffraction plane or the phase difference plane may be selected with a shape for responding to a predetermined wavelength (e.g. only to a wavelength of 660 nm). Furthermore, the order of the diffraction plane may be arbitrarily selected.

[Embodiments of optical pickup]

<First embodiment of optical pickup>

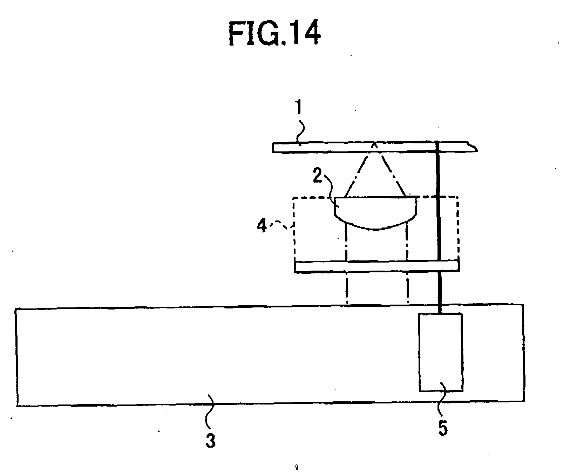

This embodiment of the present invention is described with reference to Figs.14-24.

<Overall configuration>

Fig.14 is a schematic drawing of an exemplary configuration of an optical pickup for recording, reading out, and/or erasing information in an optical recording medium. The recording or reading out of the information by condensing a light beam from a fixed optical system 3 to an optical recording medium 1 via the objective lens 2 and obtaining signals of the light beam reflected from the optical recording medium 1 from a detecting system (not shown) provided in the fixed optical system 3. Furthermore, other than the fixed optical system 3, an actuator part 4 serving as a lens driving apparatus for tilting the objective lens 2 and a tilt detecting part 5 for detecting the tilt of the optical recording medium 1 are included in the optical pickup. The objective lens 2 is tilted by the actuator part 4 in accordance with the amount of tilt detected by the tilt detecting part 5 so that the optical axis of the objective lens 2 is controlled to be constantly set to a predetermined angle with respect to the plane of the optical recording medium 1.
Next, the configuration and operation of the fixed optical system 3, the actuator part 4, and the tilt detecting part 5 are described, respectively.

<Configuration of fixed optical system>

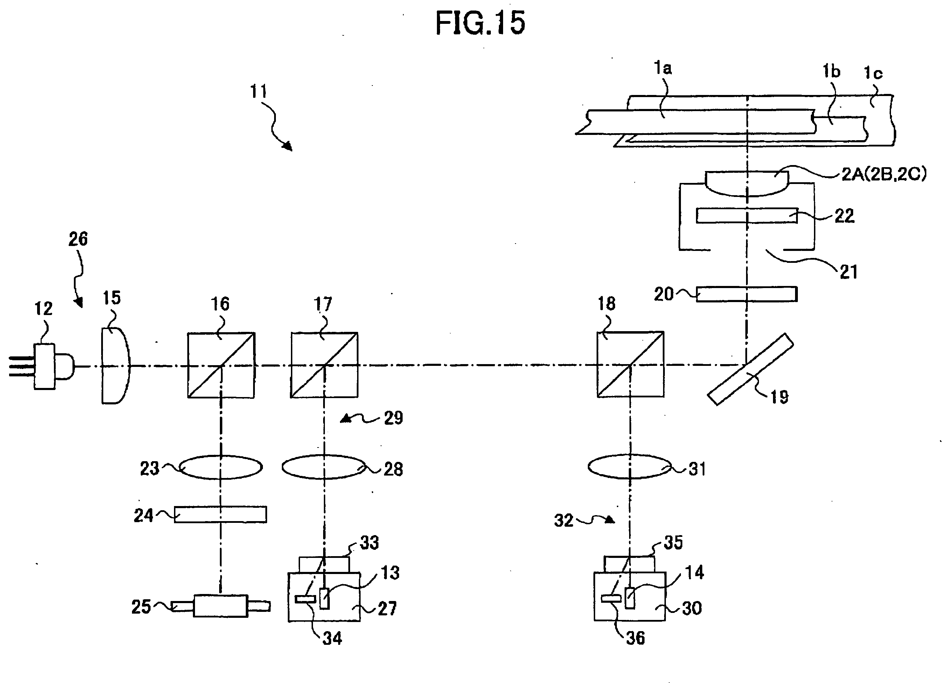

Fig.15 is a schematic drawing showing an exemplary configuration of a fixed optical system 3 of this embodiment. The optical pickup 11 of this embodiment is provided with a light source 12 having a wavelength in a blue wavelength band (wavelength λ1 = 405 nm), a light source 13 having a wavelength in a red wavelength band (wavelength λ2 = 660 nm), and a light source 14 having a wavelength in an infrared wavelength band (wavelength λ3 = 785 nm) for recording, reading-out, or erasing information in the blue type optical recording medium 1a (NA:0.65, thickness of light source side substrate: 0.6 mm), the DVD type optical recording medium 1b (NA:0.65, thickness of light source side substrate: 0.6 mm), and the CD type optical recording medium 1c (NA:0.50, thickness of light source side substrate: 1.2 mm), respectively.
The optical pickup 11 of this embodiment includes: a blue optical system 26 having a semiconductor laser (light source) of the blue wavelength band 12, a collimator lens 15, a polarizing beam splitter 16, dichroic prisms 17, 18, a deflecting prism 19, a 1/4 wave plate 20, an aperture part 21, an aperture switching part 22, and the objective lens 2 (the objective lens described in the first - third embodiments), a detecting lens 23, a beam dividing part 24, and an optical detector 25 for allowing a beam of the blue wavelength band to pass therethrough; a red optical system 29 having a hologram unit 27, a coupling lens 28, the dichroic prisms 17, 18, the deflecting prism 19, the 1/4 wave plate 20, the aperture part 21, the aperture switching part 22, and the objective lens 2A for allowing a beam of the red wavelength band to pass therethrough; and an infrared optical system 32 having a hologram unit 30, a coupling lens 31, the dichroic prism 18, the deflecting prism 19, the 1/4 wave plate 20, the aperture part 21, the aperture switching part 22, and the objective lens 2A. In other words, the dichroic prisms 17, 18, the deflecting prism 19, the 1/4 wave plate 20, the aperture part 21, the aperture switching part 22, and the objective lens 2A are components commonly shared by the two or three optical systems.
Furthermore, the hologram unit 27 includes a chip of the semiconductor laser (light source) 13, a hologram 33, and an optical detector 34 that are formed as a united body. Likewise, the hologram unit 30 includes a chip of the semiconductor laser (light source) 14, a hologram 35, and an optical detector 36 that are formed as a united body.
The optical recording media 1a, 1b, and 1c have different wavelengths. The optical recording medium 1a is a blue type optical recording medium having a substrate thickness of 0.6 mm. The optical recording medium 1b is a DVD type optical recording medium having a substrate thickness of 0.6 mm. The optical recording medium 1c is a CD type optical recording medium having a substrate thickness of 1.2 mm. One of the optical recording media 1a, 1b, and 1C is placed on a rotating mechanism (not shown) and is rotated at high speed.
Furthermore, the aperture part 21 can be regulated by a bobbin for holding the objective lens 2 moved in the focus direction and the tracking direction by the actuator part 4 and requires no particular optical component.
Next, examples of the operation of the optical systems for each wavelength band are described.
First, a case of recording, reading out, or erasing information recorded in the blue type optical recording medium 1a (wavelength λ1 of the light source 12 = 405 nm, NA = 0.65, light source side substrate thickness = 0.6 mm) is described.
The linearly polarized divergent light irradiated from the semiconductor laser 12 (wavelength = 405 nm) is made into substantially parallel rays by the collimator lens 15, is transmitted through the polarizing beam splitter 16 and the dichroic prisms 17, 18, is deflected 90 degrees by the deflecting prism 19, is made into circularly polarized light by transmitting through the 1/4 wave plate 20, is transmitted through the aperture part 21, is restricted to an NA of 0.65 by the aperture switching part 22, and is incident on the objective lens 2A, to thereby be condensed as a fine beam spot on the optical recording medium 1a. The recording, reading out, and the erasing of information are performed by using this spot.
The light reflected from the optical recording medium 1a is made into a circularly polarized light in an opposite direction with respect to that of the ingoing optical path, is again made into substantially parallel rays, is made into linearly polarized light that perpendicularly intersects the ingoing optical path by transmitting through the 1/4 wave plate 20, is transmitted through the deflecting prism 19, dichroic prisms 18, 17, is reflected by the polarizing beam splitter 16, is converged at the detecting lens 23, is divided into plural optical paths and deflected to an optical detector 25 by a deflecting and dividing part 24. Information signals and servo signals are detected from the optical detector 25.

Next, a case of recording, reading out, or erasing information recorded in the DVD type optical recording medium 1b (light source 13 having wavelength in the red wavelength band = 660 nm, NA = 0.65, light source side substrate thickness = 0.6 mm) is described. The light irradiated from the chip of the semiconductor laser 13 (wavelength = 660 nm) in the hologram unit 27 is transmitted through the hologram 33, is made into a predetermined divergent light at the coupling lens 28, is reflected in the direction of the deflecting prism 19 by the dichroic prism 17 (which allows light of blue wavelength band to transmit therethrough and reflects light of red wavelength band), is deflected 90 degrees by the deflecting prism 19 after transmitting through the dichroic prism 18, is made into circularly polarized light by transmitting through the 1/4 wave plate 20, is restricted to an NA of 0.65 at the aperture part 21, and is incident on the objective lens 2A, to thereby be condensed as a fine beam spot on the optical recording medium 1A. The recording, reading out, and the erasing of information are performed by using this spot.

The light reflected from the optical recording medium 1A is deflected by the deflecting prism 19, is reflected at the dichroic prism 17 after transmitting through the dichroic prism 18, is converged at the coupling lens 28, is diffracted in the direction of the optical detector 34 provided in the same can as the semiconductor laser 13 by the hologram 33, and is received by the optical detector 34. Information signals and servo signals are detected from the optical detector 34.

Next, a case of recording, reading out, or erasing information recorded in the CD type optical recording medium 1c (light source 14 having wavelength in infrared wavelength band = 785 nm, NA = 0.50, light source side substrate thickness = 1.2 mm) is described. The light irradiated from the semiconductor laser 14 (wavelength = 785 nm) in the hologram unit 30 is transmitted through the hologram 35, is made into a predetermined divergent light at the coupling lens 31, is reflected in the direction of the deflecting prism 19 by the dichroic prism 18 (which allows light of blue wavelength band and red wavelength band to transmit therethrough and reflects light of infrared wavelength band), is deflected 90 degrees by the deflecting prism 19, is made into elliptically polarized light or circularly polarized light by transmitting through the 1/4 wave plate 20, is transmitted through the aperture part 21, is restricted to an NA of 0.50 at the aperture switching part 22, and is incident on the objective lens 2A, to thereby be condensed as a fine beam spot on the optical recording medium 1c. The recording, reading out, and the erasing of information are performed by using this spot.

The light reflected from the optical recording medium 1c is deflected by the deflecting prism 19, is reflected at the dichroic prism 18, is converged at the coupling lens 31, is diffracted in the direction of the optical detector 36 provided in the same can as the semiconductor laser 14 by the hologram 35, and is received by the optical detector 36. Information signals and servo signals are detected from the optical detector 36.

<Tilt correcting-four axis actuator>

Fig.16 is a schematic perspective view showing an exemplary configuration of the actuator part 4. The actuator part 4 includes the objective lens 2 and an objective lens holding member 41 for holding the objective lens 2. Furthermore, the actuator part 4 includes a base part 42 for supporting the objective lens holding member 41, and flexible supporting mechanisms 43, 44 interposed between the base part 42 and the objective lens holding member 41. The flexible supporting mechanisms 43, 44 flexibly supports the base part 42 so that the objective lens holding member 41 can be moved in the focus direction, the tracking direction, the radial tilt direction, and the tangential tilt direction (total of four directions). Here, the focus direction refers to the direction of the Z axis in Fig.16 (direction of the optical axis of the objective lens 2) and the tracking direction refers to the direction of the X axis in Fig.16 (radial direction of the optical recording medium 1). Furthermore, the radial tilt direction refers to the tilt direction around the Y axis in Fig.16 (tilt direction with respect to the radial direction of the optical recording medium 1) and the tangential tilt direction refers to the tilt direction around the X axis in Fig.16 (tilt direction with respect to the rotating direction of the optical recording medium 1). Furthermore, the actuator part 4 also includes a driving part (not shown). The driving part may be, for example, the so-called voice coil motor including a permanent magnet mounted to the objective lens holding member 41 and a driving coil relatively fixed to the base part 42. Such drive part is operable to drive the objective lens holding member 41 in the four directions in accordance with input current to the driving coil. The actuator part 4 is configured to control the current input to the driving coil of the driving part, to thereby drive the focus servo and tracking servo for tracing a predetermined laser beam spot on a recording track of the information recording surface of the optical recording medium 1 and drive the tilt servo in a direction for allowing the incident direction of the laser beam (i.e. optical axis of the objective lens 2) to prevent coma aberration in the information recording surface of the optical recording medium 1.

<Tilt detecting optical system>

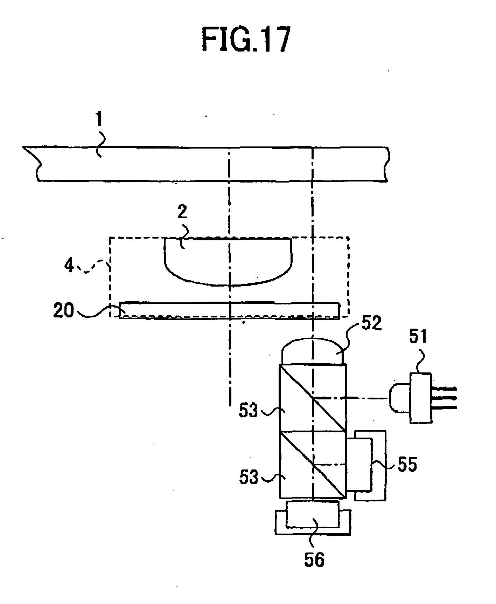

Fig.17 is a schematic drawing showing an exemplary configuration of a tilt detecting optical system that is the tilt detecting part 5. The main part of the tilt detecting optical system (tilt detecting part 5) includes a semiconductor laser 51, a collimator lens 52, a half mirror 53, a 1/4 wave plate 20, a polarizing beam splitter 54, a first optical detector 55, and a second optical detector 56. The linearly polarized divergent light irradiated from the semiconductor laser 51 is deflected 90 degrees by the half mirror 53 and is made into substantially parallel rays by the collimator lens 52. In the following 1/4 wave plate 105, a predetermined coating is applied on the light source side of its surface, to thereby allow a portion of the beam from the half mirror 53 to be reflected and the other remaining components to be transmitted therethrough. The beam transmitted through the 1/4 wave plate 20 is made into a circularly polarized light by transmitting through the 1/4 wave plate 20 and is reflected by the optical recording medium 1. The light reflected from the optical recording medium 1 is made into a circularly polarized light in an opposite direction with respect to that of the ingoing optical path, is again made into linearly polarized light that perpendicularly intersects the ingoing optical path by transmitting through the 1/4 wave plate 20. In other words, the light reflected from the surface of the 1/4 wave plate 20 and the light transmitted through the 1/4 wave plate 20 and reflected from the optical recording medium 1 are reflected light beams orthogonally incident on the collimator lens 52. Then, each of the reflected light beams travels substantially on the same optical path and passes through the half mirror 53, to thereby be incident on the polarizing beam splitter 54. Then, the optical paths for the light beam reflected from the surface of the 1/4 wave plate 20 and for the light beam reflected from the optical recording medium 1 are separated by the polarizing beam splitter 54. The light beam reflected from the optical recording medium 1 is reflected to the first optical detector 55 from the polarizing beam splitter 54 and the light beam reflected from the 1/4 wave plate 20 is transmitted through the polarizing beam splitter 54 and is incident on the second optical detector 56.

Next, a method of dividing the optical detector and a method of computing output signals (tilt signals) are described.

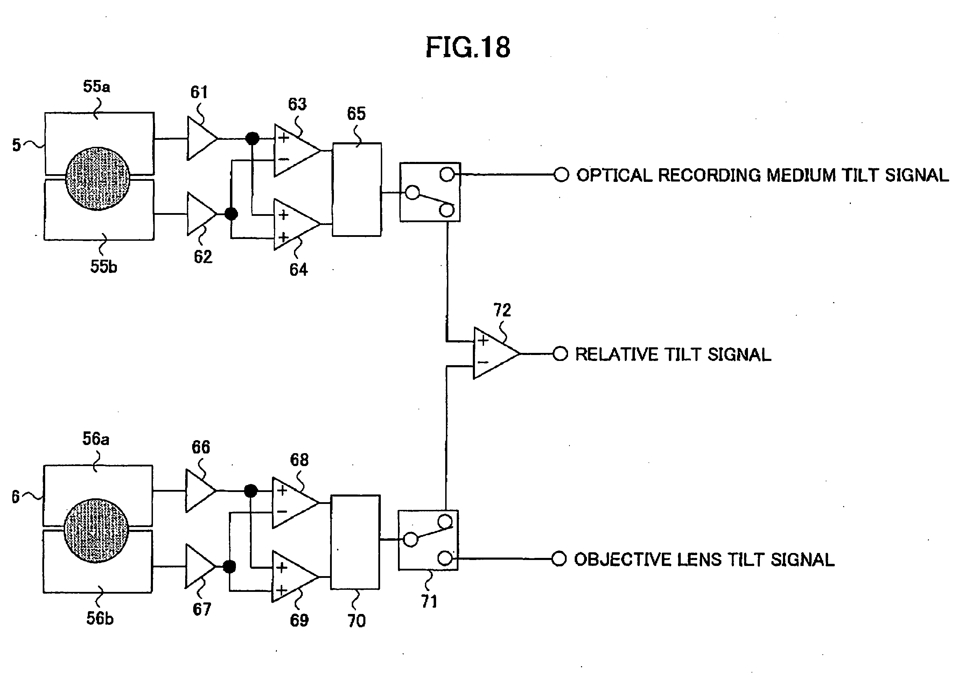

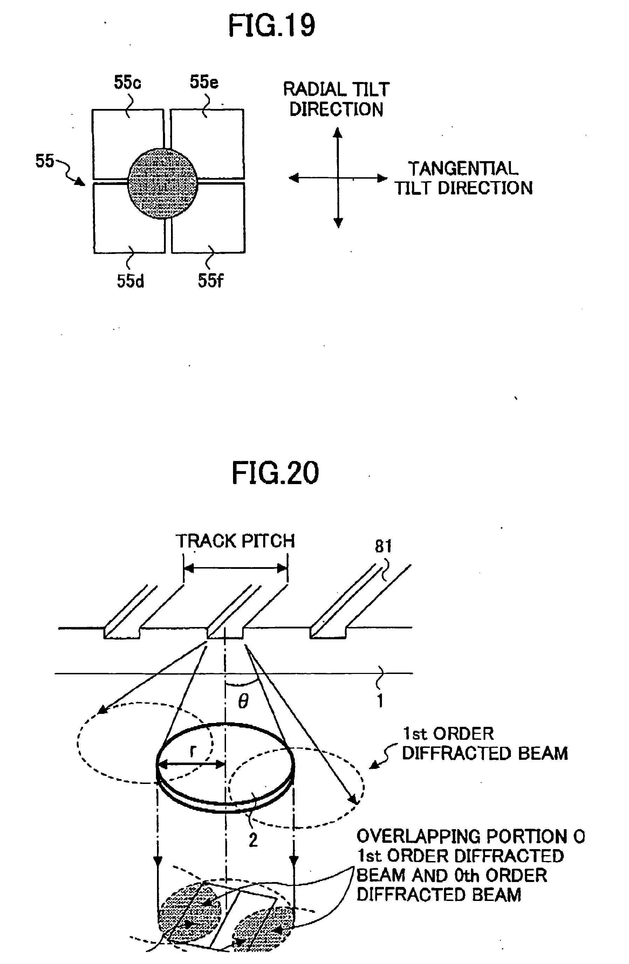

Although a detailed configuration of a part for computing the values output from the first and second optical detectors 55, 56 is described with reference to Figs.17 and 18, the following describes only a case of a single direction (e.g. radial direction) for the sake of convenience. More specifically, the first optical detector 55 (also the second optical detector 56) actually employs a four-part optical detector having optical detector parts 55c-55f as shown in Fig.19. However, since the following describes a case of a single direction, the first optical detector 55 in this case employs a two-part optical detector having only optical detector parts 55a and 55b (the second optical detector 56 in this case employs a two-part optical detector having only optical detector parts 56a and 56b).

For the purpose of detecting the tilt amount of the optical recording medium 1, the optical detector 55, which is operable to detect reflected light from the optical recording medium 1, is provided with a pair of optical detector parts 55a, 55b. The pair of optical detector parts 55a, 55b are arranged along the radial direction of the optical recording medium 1. Therefore, when the optical recording medium 1 is tilted, the level of the detection signals from one of the pair of optical detector parts 55a, 55b becomes greater than the other in accordance with the direction of the tilt. Each of the pair of optical detector parts 55a, 55b is connected to a preamp 61, 62. The preamps 61, 62 are connected to a difference circuit 63 for outputting difference signals based on the difference in the output signals from the preamps 61, 62. By computing the difference signals output from the difference circuit 63, the tilt amount of the optical recording medium 1 is obtained. In a case where the characteristics of the detection signals from the preamps 311, 312 are changed due to changes of reflectivity of the optical recording medium 1 or changes in the strength of the light beam irradiated from the light source 301 along with the passage of time, such change of characteristics is corrected by the following circuits. That is, the signals from the preamps 61, 62 are added at an adder circuit 64. Then, the output from the adder is input to a division circuit 65. In the division circuit 65, the difference output from the difference circuit 63 is normalized based on the addition output, and the variable components included in the difference output is removed. Thereby, tilt signals of the optical recording medium 1 are generated from the division circuit 65.

For the purpose of detecting the tilt amount of the actuator part 4 having the objective lens 2 and the 1/4 wave plate 20 mounted thereto, the second optical detector 56, which is operable to detect reflected light from the 1/4 wave plate 20 of the actuator part 4, is provided with a pair of optical detector parts 56a, 56b. When the objective lens 2 is tilted, the level of the detection signals from one of the pair of optical detector parts 56a, 56b becomes greater than the signal level of the other one in accordance with the direction of the tilt. Each of the pair of optical detector parts 56a, 56b is connected to a preamp 66, 67. The preamps 66, 67 are connected to a difference circuit 68 for outputting difference signals based on the difference in the output signals from the preamps 66, 67. By computing the difference signals output from the difference circuit 68, the tilt amount of the actuator part 4 (i.e. the objective lens 2) is obtained. In a case where the characteristics of the detection signals from the preamps 66, 67 are changed due to changes in the strength of the light beam irradiated from the light source 51 along with the passage of time, such change of characteristics is corrected by the following circuits. That is, the signals from the preamps 66, 67 are added at an adder circuit 69. Then, the output from the adder is input to a division circuit 70. In the division circuit 70, the difference output from the difference circuit 68 is normalized based on the addition output, and the variable components included in the difference output is removed. Thereby, tilt signals of the objective lens 2 are generated from the division circuit 70.

The division circuits 65, 70, which output tilt signals in correspondence with the tilt amount of the optical recording medium 1 and the objective lens 2, are connected to a difference circuit 72. The difference circuit 72 outputs the difference between the output tilt signals. The difference output from the difference circuit 72 corresponds to the relative tilt amount of the objective lens 3 with respect to the optical recording medium 1. A switch 71 is provided before the difference circuit 72 for controlling the tilt by selecting between objective lens tilt signals and relative tilt signals in accordance with the below-described control procedures.

As shown in Figs. 3(d), 4(d), 5(d), 7(d), 8(d), 9(d), 11(d), and 12(d), the amount of tilt required for the objective lens 2 for correcting the tilt of the optical recording medium 1 is different depending on the type of the optical recording medium 1 in terms of polarity/tilt angle. In this embodiment, since (1) the relative angle between the optical recording medium 1 and the objective lens 2, (2) the relative angle between the optical recording medium 1 and a predetermined reference surface of the optical pickup 11, and (3) the relative angle between the objective lens 2 and a predetermined reference surface of the optical pickup 11 are detected (angle detecting part), the control of the correction can be executed based on a map that is stored beforehand. For example, in a case of detecting a signal indicating that the relative angle between the optical recording medium 1 and a predetermined reference surface of the optical pickup 11 is 0.6 degrees, the correction may be executed by sending feedback for setting the relative angle between the objective lens 2 and a predetermined reference surface of the optical pickup 11 to be 0.6 degrees.

Furthermore, a predetermined gain (not shown) may also be added (correction part) during the computation. Moreover, the gain may be switched according to the light source that is lit (correction part). For example, as described above, since the amount of lens tilt required for correction differs depending on the type of the optical recording medium 1, a gain may be added to either one of (2) or (3) so that a signal of equal level is output.

Along with correcting the tilt error of the beam incident on the objective lens 2 upon assembling and adjusting the optical pickup 11 or correcting coma aberration due to manufacture error of the objective lens 2, the tilt of the lens tilt actuator 4 is adjusted upon assembling the actuator 4. It is preferred to adjust the tilt of the actuator 4 with respect to a lit light source having a severely degraded coma aberration due to lens tilt. Although the assembling and adjusting is not performed on other wavelengths, according to this embodiment, the tilt error of the beam incident on the objective lens 2 or the optimum position of the objective lens for correcting the coma aberration due to manufacture error can be confirmed beforehand in the process of assembling the optical pickup so that the relation shown in Figs. 3(d), 4(d), 5(d), 7(d), 8(d), 9(d), 11(d), and 12(d) may be offset with respect to the confirmed position. This allows coma aberration from the error in the assembling and manufacture process to also be corrected by the lens tilt. Instead of performing the adjustment of tilt error, the tilt error may also be corrected by offset of the tilt signals.

<Other configurations for tilt detection>

In the optical pickup 11 of this embodiment, although the tilt angle of the objective lens 2 and the optical recording medium 1 are used as drive signals of the actuator part 4, a method of correcting coma aberration by using the relative tilt between the objective lens 2 and the optical recording medium 1 may be employed.

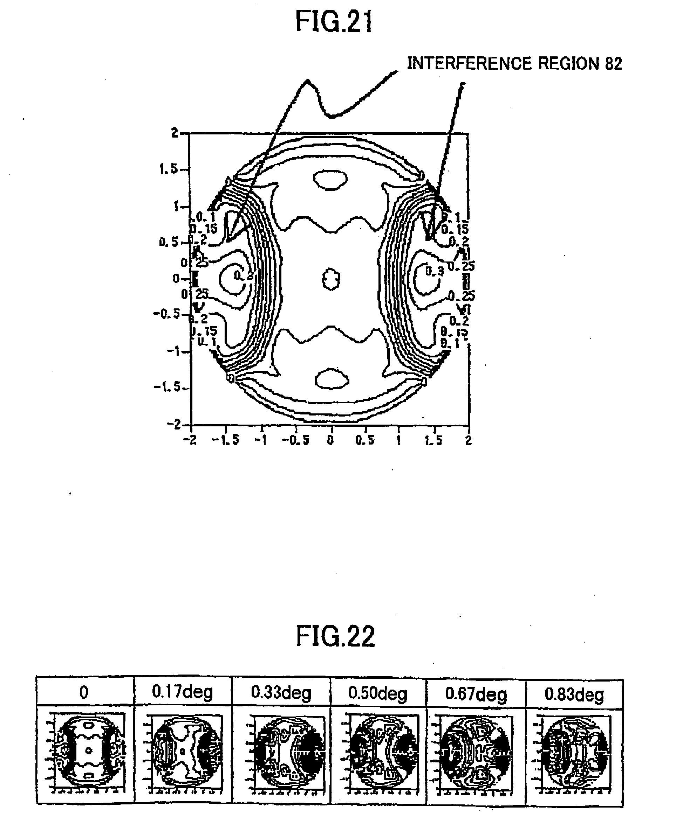

Next, a method of detecting coma aberration is described. As shown in Fig.20, guiding grooves 81 are formed in the optical recording medium 1. The light reflected from the guiding grooves 81 include $0^{th}$ order light and $\pm 1^{st}$ order diffraction light that interfere with each other. Fig.21 is a drawing showing the $0^{th}$ order light (rectilinear light) and the $\pm 1^{st}$ order diffraction light received on the light receiving surface of the optical element 56 when viewing the light receiving surface of the optical element 56. The $0^{th}$ order light and $1^{st}$ order diffraction light share an overlapping portion which is referred to as an interference region 82.

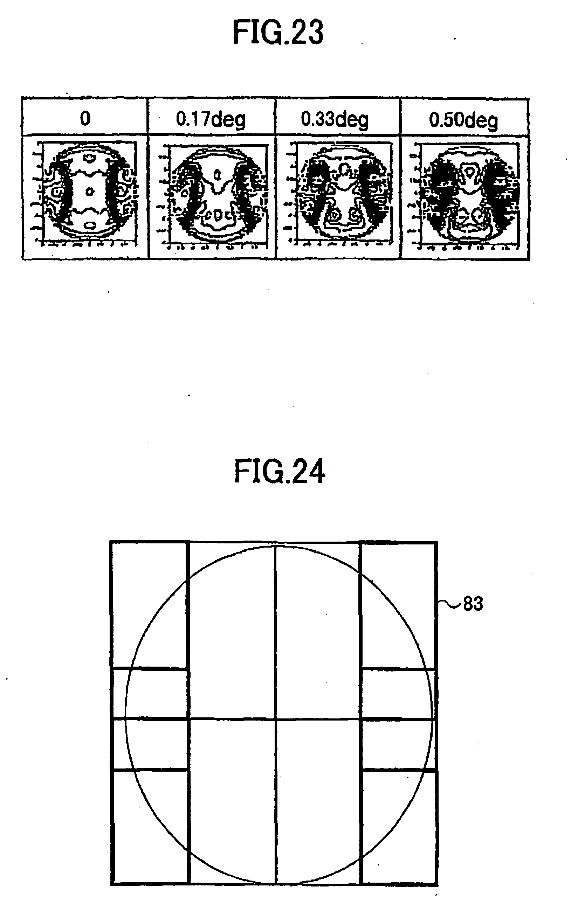

Next, how the interference region 82 changes in association with the tilt of the optical recording medium 1 is described with reference to Figs. 22 and 23. Fig.22 shows the changes of the interference region 82 when the optical recording medium 1 is tilted in the radial direction. A bias in the amount of light is created in association with the left and right sides of Fig. 22. This is due to the fact that coma aberration is created in the spot formed on the optical recording medium 1 by the tilt of the optical recording medium. This bias occurs in opposite directions in one interference region 82 and the other interference region 82. In Fig.22, it can be understood that the region on the right side of Fig.22 becomes stronger and the region on the left side of Fig.22 becomes weaker as the tilt becomes greater. The same applies to the interference region 82 when the rotation direction (tangential direction) of the optical recording medium 1 is tilted.

Accordingly, tilt detection can be executed by detecting the distribution in the amount of light. For example, as shown in Fig.24, an optical detector 83 that is divided into plural parts may be used for detecting the pattern changes of the interference region 82.

<Second Embodiment of Optical Pickup>

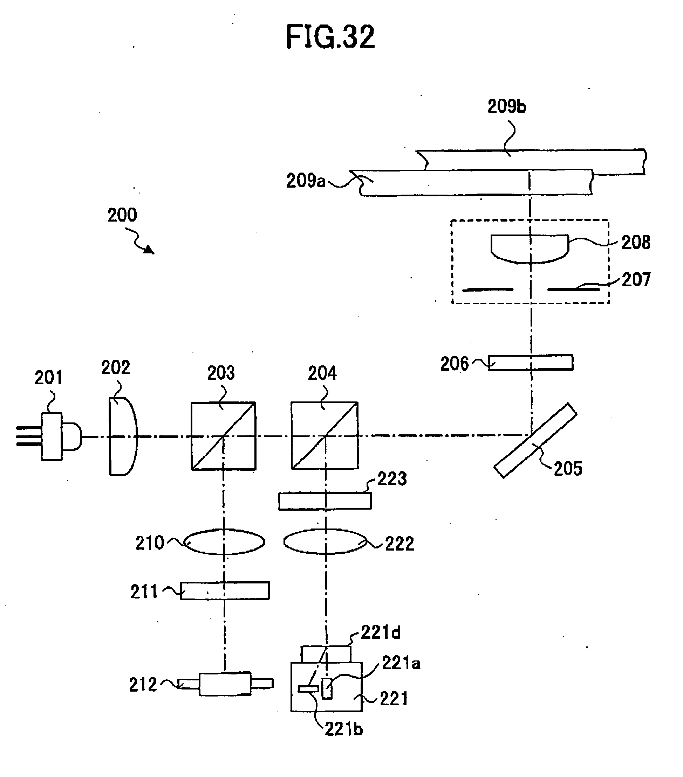

This embodiment of the present invention is described with reference to Figs.32-34. The optical pickup of this embodiment is for performing recording, read-out, or erasing on two types of optical recording media including a blue type optical recording medium (wavelength $\lambda 1$: 405 nm, NA:0.65, thickness of light source side substrate: 0.6 mm) and a DVD type optical recording medium (wavelength λ2: 660 nm, NA:0.65, thickness of light source side substrate: 0.6 mm).

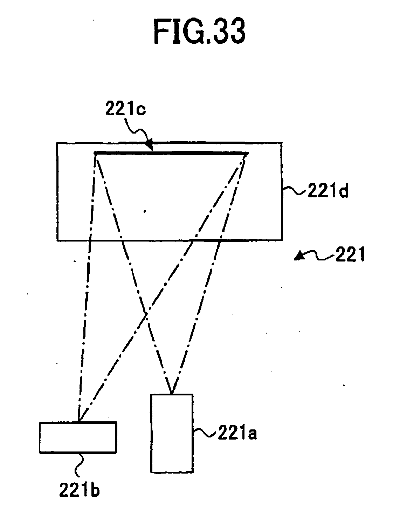

Fig.32 is a schematic drawing showing an exemplary configuration of an optical pickup 200 of this embodiment in relation to that shown in Fig.15. The optical pickup 200 of this embodiment includes: a blue optical infinite system comprising a semiconductor laser 201 of the blue wavelength band, a collimator lens 202, a polarizing beam splitter 203, a dichroic prism 204, a deflecting prism 205, a 1/4 wave plate 206, an aperture 207, an objective lens 208, a detecting lens 210, a beam dividing part 211, and an optical detector 212 for allowing a beam of the blue wavelength band to pass therethrough; and a red optical infinite system comprising a hologram unit 221, a collimator lens 222, a phase correcting element 223, the dichroic prisms 204, the deflecting prism 205, the 1/4 wave plate 206, the aperture 207, and the objective lens 208 for allowing a beam of the red wavelength band to pass therethrough. In other words, the dichroic prism 204, the deflecting prism 205, the 1/4 wave plate 206, the aperture 207, and the objective lens 208 are situated on an optical path common between the two optical systems. Furthermore, the hologram unit 221 includes a laser chip 221a of the DVD wavelength band, an optical detector 221b, a hologram 221d including a detecting hologram 221c that are formed as a united body (See Fig.33).

The objective lens 208 is designed to be optimum for satisfying the sine conditions with incident light in an infinite system with respect to the blue type optical recording medium 209a (wavelength λ1: 405 nm, NA:0.65, thickness of light source side substrate: 0.6 mm). Furthermore, since the numerical aperture NA for the blue type and the DVD type are the same, their incident beam diameters to the objective lens 208 may be substantially the same size, and commonly have the aperture (aperture element) 207 situated before the objective lens 208.

The optical recording media 209a and 209b have different wavelengths. The optical recording medium 209a is a blue type optical recording medium having a substrate thickness of 0.6 mm. The optical recording medium 209b is a DVD type optical recording medium having a substrate thickness of 0.6 mm. One of the optical recording media 209a or 209b is placed on a rotating mechanism (not shown) and is rotated at high speed.

Furthermore, the optical pickup includes an objective lens tilt actuator (lens driving apparatus) 224 serving as a disk tilt correcting part for tilting the objective lens 208 in the radial or tangential direction of the optical disk.

Next, a case of recording, reading out, or erasing information recorded in the blue type optical recording medium 209a (wavelength λ1: 405 nm, numerical aperture NA: 0.65, light source side substrate thickness = 0.6 mm) is described. The linearly polarized divergent light irradiated from the semiconductor laser 201 (wavelength = 405 nm) is made into substantially parallel rays by the collimator lens 202, is transmitted through the polarizing beam splitter 203 and the dichroic prism 204, is deflected 90 degrees by the deflecting prism 205, is made into circularly polarized light by transmitting through the 1/4 wave plate 206, is transmitted through the aperture 207, and is incident on the objective lens 208, to thereby be condensed as a fine beam spot on the optical recording medium 209a. The recording, reading out, and the erasing of information are performed by using this spot. The light reflected from the optical recording medium 209a is made into a circularly polarized light in an opposite direction with respect to that of the ingoing optical path, is again made into substantially parallel rays, is made into linearly polarized light that perpendicularly intersects the ingoing optical path by transmitting through the 1/4 wave plate 206, is reflected by the polarizing beam splitter 203, is converged at the condenser lens 210, and is divided into plural optical paths and deflected to an optical detector 212 by a beam dividing part 211. Information signals and servo signals are detected from the optical detector 212.

Next, a case of recording, reading out, or erasing information recorded in the DVD type optical recording medium 209b (wavelength: 660 nm, NA: 0.65, light source side substrate thickness: 0.6 mm) is described. In recent years, an optical detector has been provided inside a single can (package) of an optical pickup for DVD. Furthermore, a hologram unit is becoming commonly used for performing beam separation using a hologram. This embodiment also uses a hologram unit 221 for DVD types. The light (wavelength: 660 nm) irradiated from the laser chip 221a in the hologram unit 221 is transmitted through the hologram 221d, is made into substantially parallel rays by the collimator lens 222, is provided with spherical aberration by the phase correcting element 223 (for correcting the chromatic aberration created in a case of using the objective lens in a red wavelength band where the objective lens is optimized for blue wavelength band), is reflected in the direction of the deflection prism 205 by the dichroic prism 204 (which allows light of blue wavelength band to transmit therethrough and reflects light of red wavelength band), is deflected 90 degrees by the deflecting prism 205, is made into circularly polarized light by transmitting through the 1/4 wave plate 206, is passed through the aperture 207, and is incident on the objective lens 208, to thereby be condensed as a fine beam spot on the optical recording medium 209b. The recording, reading out, and the erasing of information are performed by using this spot. The light reflected from the optical recording medium 209b is deflected by the deflecting prism 205, is reflected at the dichroic prism 204, is converged at the collimator lens 222, is diffracted in the direction of the optical detector 221b provided in the same can as the laser chip 221a by the hologram 221d, and is received by the optical detector 221b. Information signals and servo signals are detected from the optical detector 221b.

Next, the objective lens tilt actuator 224 for correcting coma aberration is described. Since the objective lens tilt actuator 224 has the same configuration as that of the actuator part 4 shown in Fig.16, illustration and description thereof are omitted.

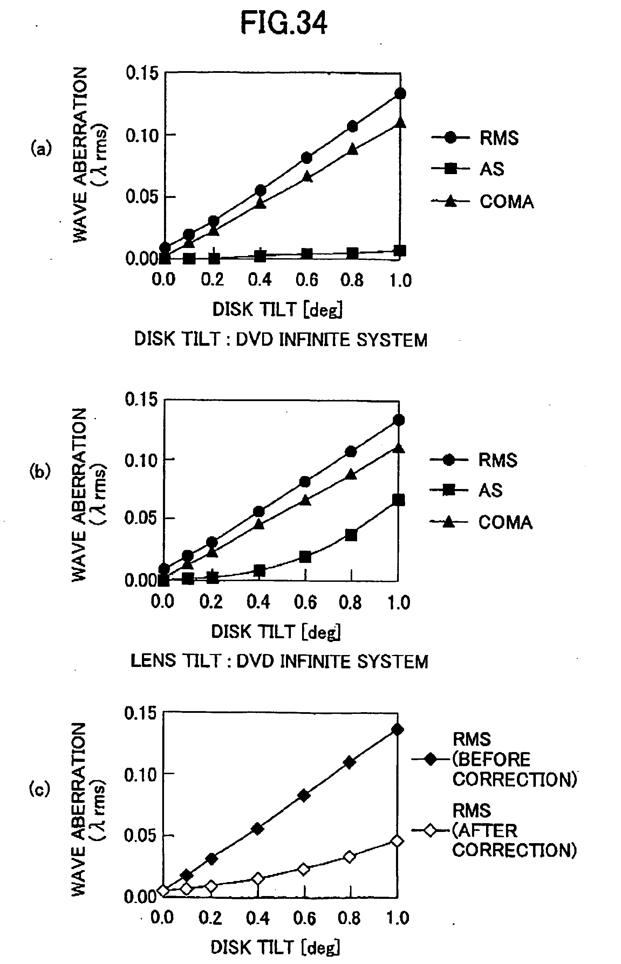

Accordingly, coma aberration created from disk tilt can be cancelled by tilting the objective lens 208 with use of the objective lens tilt actuator 224 for the blue type optical recording medium. Furthermore, coma aberration can be created by tilting the objective lens 208 as shown in Fig.34(b) by using an infinite system as the optical system for the DVD type optical recording medium. Accordingly, the same as the blue type optical recording medium, the coma aberration created by the tilt of the optical disk 209b (as shown in Fig.34(a)) can be cancelled by arranging the optical disk 209b and the objective lens 208 in parallel. This is shown in Fig.34(c).

In a case where the objective lens 208, which is optimized for blue wavelength in an infinite system, is used on a DVD red wavelength in an infinite system, the numerical aperture NA of the DVD or the disk substrate thickness, or both the numerical aperture NA and the substrate thickness are to be substantially the same as the blue type optical recording medium. In a case where the numerical aperture NA or the substrate thickness for both are significantly different from each other, the aberration during use of the DVD infinite system becomes greater, and correction with the phase correcting element 223 becomes difficult or impossible. Furthermore, by making the substrate thickness the same, the manufacturing infrastructure for the blue type and the DVD type optical recording media can be shared. Accordingly, the manufacturing cost for the upcoming blue type optical disks can be reduced. The same applies to the numerical aperture NA, in which making the numerical aperture of the blue type optical recording medium smaller than that of the DVD type optical recording medium prevents the condensing beam spot on the optical disk from becoming sufficiently small, thereby making it difficult to achieve the initial objective of attaining large capacity. Furthermore, making the numerical aperture larger than the DVD not only causes aberration during use of the DVD infinite system to become greater, but also the disk tilt margin is reduced by the increase of coma aberration from the disk tilt. Accordingly, it becomes considerably difficult to achieve correction within the margin even by using the tilt correcting part of this embodiment.

<Third Embodiment of Optical Pickup>

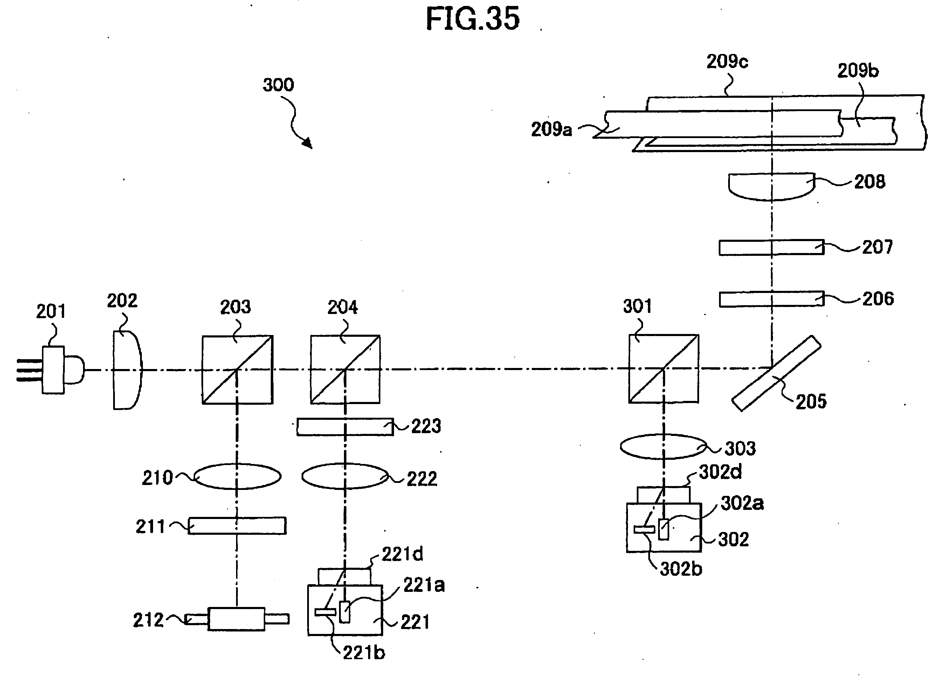

This embodiment of the present invention is described with reference to Fig.35. The optical pickup of this embodiment has a CD optical system added to the second embodiment and is configured as a three wavelength optical pickup 300. It is different from the second embodiment in that the CD optical system is added. In other words, the optical pickup of this embodiment is for performing recording, read-out, or erasing on three types of optical recording media including a blue type optical recording medium (wavelength λ1: 405 nm, NA:0.65, thickness of light source side substrate: 0.6 mm), a DVD type optical recording medium (wavelength λ2: 660 nm, NA:0.65, thickness of light source side substrate: 0.6 mm), and a CD type optical recording medium (wavelength λ3: 785 nm, NA:0.50, thickness of light source side substrate: 1.2 mm) .

Fig.35 is a schematic drawing showing an exemplary configuration of an optical pickup 300 of this embodiment in relation to that shown in Fig.32. The optical pickup 300 of this embodiment includes: a blue optical infinite system comprising a semiconductor laser 201 of the blue wavelength band, a collimator lens 202, a polarizing beam splitter 203, a dichroic prism 204, a deflecting prism 205, a wave plate 206, an aperture switching element 207, an objective lens 208, a detecting lens 210, a beam dividing part 211, and an optical detector 212 for allowing a beam of 405 nm wavelength band to pass therethrough; a DVD optical infinite system comprising a hologram unit 221, a collimator lens 222, a phase correcting element 223, dichroic prisms 204, 301, the deflecting prism 205, the wave plate 206, the aperture switching part 207, and the objective lens 208 for allowing a beam of 660 nm wavelength band to pass therethrough; and a CD optical finite system comprising a hologram unit 302, a coupling lens 303, the dichroic prism 301, the deflecting prism 205, the wave plate 206, the aperture switching element 207, and the objective lens for allowing a beam of 785 nm wavelength to pass therethrough.

In other words, the dichroic prisms 204, 301, the prism 205, the wave plate 206, the aperture switching element 207, and the objective lens 208 are components commonly shared by the two or three optical systems.

The objective lens 208 is designed to be optimum for satisfying the sine conditions with incident light in an infinite system with respect to the blue type optical recording medium 209a (wavelength λ1: 405 nm, NA:0.65, thickness of light source side substrate: 0.6 mm). Furthermore, since the numerical aperture NA for the blue type and the DVD type are the same, their incident beam diameters on the objective lens 208 may be substantially the same size, and commonly have the aperture (aperture element) 207 situated before the objective lens 208.

The optical recording medium 209a is a blue type optical recording medium having a substrate thickness of 0.6 mm. The optical recording medium 209b is a DVD type optical recording medium having a substrate thickness of 0.6 mm. The optical recording medium 209c is a CD type optical recording medium having a substrate thickness of 1.2 mm. One of the optical recording media 209a, 209b, or 209c is placed on a rotating mechanism (not shown) and is rotated at high speed.

Furthermore, the optical pickup includes an objective lens tilt actuator (lens driving apparatus) 224 serving as a disk tilt correcting part for tilting the objective lens 208 in the radial or tangential direction of the optical disk.

Since the operations of the blue type optical system and the DVD type optical system are the same as those of the second embodiment, further description thereof is omitted. Therefore, only a case of recording, reading out, or erasing information recorded in the CD type optical recording medium 209c (wavelength $\lambda$3: 780 nm, numerical aperture NA: 0.50, light source side substrate thickness = 1.2 mm) is described. The same as the optical pickup for the DVD type, the optical pickup for the CD type also has an optical detector provided inside a single can and commonly uses a hologram unit for performing beam separation with a hologram. The same as the hologram unit 221 shown in Fig.32, the hologram unit 302 includes a semiconductor laser 302a, a hologram 302d, and an optical detector 302c that are formed as a united body. The light (wavelength: 780 nm) irradiated from the semiconductor laser 302a in the hologram unit 302 is transmitted through the hologram 302d, is converted into a predetermined divergent beam at the coupling lens 303, is reflected in the direction of the prism 205 by the dichroic prism 301 (which allows light of blue and red wavelength bands to transmit therethrough and reflects light of infrared wavelength band), is deflected 90 degrees by the deflecting prism 205, is made into elliptically polarized light or circularly polarized light by transmitting through the wave plate 206, is restricted to an numerical aperture NA of 0.50 by the aperture switching part 207, and is incident on the objective lens 208, to thereby be condensed as a fine beam spot on the optical recording medium 209c. The recording, reading out, and the erasing of information are performed by using this spot.

The light reflected from the optical recording medium 209c is deflected by the prism 205, is reflected at the dichroic prism 301, is converged at the coupling lens 303, is diffracted in the direction of the optical detector 302c, and is received by the optical detector 302c. Information signals and servo signals are detected from the optical detector 302c.

Since the configuration of the objective lens tilt actuator 221 for correcting coma aberration and the operation of tilt correction are the same as those of the second embodiment, further description thereof is omitted.

In a case where the objective lens 208, which is optimized for blue wavelength being the shortest wavelength in an infinite system, is used on a DVD red wavelength in an infinite system, the numerical aperture NA of the DVD or the disk substrate thickness, or both the numerical aperture NA and the substrate thickness are to be substantially the same as the blue type optical recording medium. In a case where the numerical apertures NA or the substrate thicknesses for both are significantly different from each other, the aberration during use of the DVD infinite system becomes greater, and correction with the phase correcting element 223 becomes difficult or impossible. Furthermore, by making the substrate thickness the same, the manufacturing infrastructure for the blue type and the DVD type optical recording media can be shared. Accordingly, the manufacturing cost for the upcoming blue type optical disks can be reduced. The same applies to numerical aperture NA, in which making the numerical aperture of the blue type optical recording medium smaller than that of the DVD type optical recording medium prevents the condensing beam spot on the optical disk from becoming sufficiently small, thereby making it difficult to achieve the initial objective of attaining large capacity- Furthermore, making the numerical aperture larger than the DVD not only causes aberration during use of the DVD infinite system to become greater, but also the disk tilt margin is reduced by the increase of coma aberration from the disk tilt. Accordingly, it becomes considerably difficult to achieve correction within the margin even by using the tilt correcting part of this embodiment.

Furthermore, in a case of making the numerical aperture NA the same, there is a slight difference in the incident beam diameter to the objective lens 208 due to the differences of refractive index among the wavelengths. However, since this difference is subtle, the incident beam diameter can be configured to be substantially equal so that a single aperture element 207 can be shared. Thereby, the number of components can be reduced. Furthermore, since there is little coma aberration due to disk tilt and the tilt margin is sufficient, there is no need to consider tilt correction by the tilting the objective lens. In a case of using a CD type optical recording medium on an objective lens 208 optimized for blue wavelength in an infinite system, the optical system for the CD is set as a finite system allowing the most satisfactory aberration to be attained.

[Embodiment of Optical Information Processing Apparatus]

An exemplary configuration of an optical information processing apparatus is described with reference to Fig. 25. The optical information processing apparatus is for providing compatibility in recording, reading out, or erasing information among optical recording media 1a, 1b, 1c having different wavelength and different numerical aperture NA by using an optical pickup 11 (200 or 300) shown in Fig. 15 (Fig.32 or Fig.35). In this embodiment, the optical recording medium 1 (1a, 1b, or 1c) has a disk shape and is housed in a protective case 93. The optical recording medium 1 (1a, 1b, or 1c) in each case is set inside the optical information processing apparatus 91 by being inserted from an insert slot 94 in the arrow direction and is rotated by a spindle motor 95. Accordingly, the optical pickup 11 performs recording, reading out, or erasing of information on the optical recording medium 1. It is to be noted that the optical recording medium 1 (1a, 1b, or 1c) does not need to be housed inside the protective case 93, and may be in an exposed state.

By using the objective lens 2 and the optical pickup 11 according to the above-described embodiments of the present invention, the optical information processing apparatus 91, which includes an objective lens and an optical pickup that sufficiently controls spherical aberration without requiring an aberration correcting element, can be provided for three generation optical recording media of blue type/DVD type/CD type (or two generation optical recording media of a blue type/DVD type) .

The present invention is not limited to these embodiments, but variations and modifications may be made without departing from the scope of the present invention as defined in the appended claims.

**Claims**

1. An optical information processing apparatus for converging and irradiating light from light sources of $\lambda 1$ and $\lambda 2$ wavelengths with $\lambda 1 < \lambda 2$ via an objective lens onto an optical rewording medium through first and second substrates, respectively, and recording, reading out, or erasing information with respect to the optical recording medium, the optical information processing apparatus **characterized by**

   satisfying the conditions of

$$(1) \ldots |CL1/CD1| \geq 1$$

$$(2) \ldots |CL2/CD2| \geq 1,$$

   wherein CDx, x=1,2, is the value of each least square error, unit: $\lambda$ rms, of the third order coma aberration components generated per angle when the first and second substrates are tilted;
   wherein CLx, x=1,2, is the value of each least square error, unit: $\lambda$ rms, of the third order coma aberration components generated per angle when the objective lens is tilted during the converging and irradiating to the optical recording medium: and
   wherein the conditions (1) and (2) are defined for an incident light beam of a blue wavelength band corresponding to the $\lambda 1$ wavelength and for an incident light beam of a red wavelength band corresponding to the $\lambda 2$ wavelength.

2. The optical information processing apparatus as claimed in claim 1, **characterized in that** the conditions () and (2) are defined for an incident light beam in an infinite system with respect to the light irradiated from the light source of the $\lambda 1$ wavelength and are defined for an incident light beam in a finite system with respect to the light irradiated from the light source of the $\lambda 2$ wavelength.

3. The optical information processing apparatus as claimed in claim 1, **characterized by** further comprising:

   a light source of $\lambda 3$ wavelength:

      the optical information processing apparatus converging and irradiating light from light sources of $\lambda$, $\lambda 2$, and $\lambda 3$ wavelengths, with $\lambda 1 < \lambda 2 < \lambda 3$, via the objective lens onto an optical recording medium through first, second, and third substrates, respectively, and recording, reading out, or erasing information with respect to the optical recording medium, the optical information processing apparatus:

   satisfying the conditions of

$$(3) \ldots |CL1/CD1| \geq 1$$

$$(4) \ldots |CL2/CD2| \geq 1$$

$$(5) \ldots |CL3/CD3| \geq 1,$$

wherein CDx, x=1,2,3, is the value of each least square error, $\lambda$ rms, of the third order coma aberration components generated per angle when the first, second, and third substrates are tilted;

wherein CLx, x=1,2,3, is the value of each least square error, $\lambda$ rms, of the third order coma aberration components generated per angle when the objective lens is tilted during the converging and irradiating to the optical recording medium;

and wherein the conditions (3), (4) and (5) are defined for an incident light beam of a blue wavelength band corresponding to the $\lambda$1 wavelength, for an incident light beam of a red wavelength band corresponding to the $\lambda$2 wavelength, and for an incident beam of an infrared wavelength band corresponding to the $\lambda$3 wavelength.

4.  The optical information processing apparatus as claimed in claim 3, **characterized in that** the conditions (3), (4), and (5) are defined for an incident light beam in an infinite system with respect to the light irradiated from the light source of the $\lambda$1 or the $\lambda$2 wavelength and are defined for an incident light beam in an infinite system with respect to the light irradiated from the light source of the $\lambda$3 wavelength.

5.  The optical information processing apparatus as claimed in claim 3, **characterized in that** the conditions (3), (4), and (5) are defined for an incident light beam in an infinite system with respect to the light irradiated from the light source of the $\lambda$1 wavelength and are defined for an incident light beam in a finite system with respect to the light irradiated from the light source of the $\lambda$2 or the $\lambda$3 wavelength.

6.  The optical information processing apparatus lens as claimed in one of claims 1-5, **characterized in that** the objective lens is fabricated as a single element lens having an aspheric surface at least on one side, by glass molding or resin molding:

    wherein the objective lens satisfies a condition of

$$(r2+r1)/(r2-r1) \geq 0.7$$

    wherein r1 is the radius of curvature of the light source side of the objective lens; and
    wherein r2 is the radius of curvature of the optical recording medium side of the objective lens.

7.  The optical information processing apparatus as claimed in one of claims 1-5, **characterized in that** the objective lens is a one group two element bonded type objective lens.

8.  The optical information processing apparatus as claimed in claim 6 or claim 7, **characterized in that** the objective lens has a diffraction plane or a phase difference plane at least on one side.

9.  The optical information processing apparatus as claimed in claim 8, **characterized in that** the optical axis of the objective lens is tilted with respect to an incident beam, wherein the objective lens is mounted on a lens driving apparatus for tilting the objective lens at least in one of a radial direction and a rotation direction of the optical recording medium.

10. The optical information processing apparatus as claimed in claim 9, **characterised by** further comprising:

    angle detecting means for detecting at least two or more of the relative angle between the optical recording medium and the objective lens, the relative angle between the optical recording medium and a predetermined reference surface of the optical pickup, and the relative angle between the objective lens and the predetermined reference surface of the optical pickup; and
    correcting means for providing a predetermined gain or offset to respective relative angle signals detected by the angle detecting means in accordance with the light source that is lit.

11. The optical information processing apparatus as claimed in claim 9, **characterized by** further comprising:

    coma aberration amount detecting means for detecting coma aberration amount occurring in accordance with the relative angle between the objective lens and the optical recording medium.

12. The optical information processing apparatus as claimed in claim 1 **characterized by** further comprising:

an optical system forming an incident light beam in an infinite system with respect to the objective lens for any one of the light of the λ1 and λ2 wavelengths;

a lens driving apparatus on which the objective lens is mounted, the lens driving apparatus tilting the objective lens in at least in one of a radial direction and a rotation direction of the optical recording medium so that the optical axis of the objective lens is tilted with respect to an incident beam; and

a common aperture element situated on an optical path between the light source and the objective lens for providing substantially equal beam diameter with respect to an incident beam on the objective lens for the two wavelengths λ1 and λ2,

wherein the numerical aperture on the optical recording medium side of the objective lens for the λ1 wavelength is substantially equal to that for the λ2 wavelength.

13. The optical information processing apparatus as claimed in claim 3 **characterized by** further comprising:

an optical system forming an incident light beam in an infinite system with respect to the objective lens for the light of the wavelengths of the two optical recording media having substantially the same substrate thickness and forming an incident light beam in a finite system with respect to the objective lens for the light of the remaining wavelength; and

a lens driving apparatus for tilting the objective lens in at least in one of a radial direction and a rotation direction of the optical recording medium so that the optical axis of the objective lens is tilted with respect to an incident beam.

14. The optical information processing apparatus as claimed in claim 3 **characterized by** further comprising:

an optical system forming an incident light beam in an infinite system with respect to the objective lens for the light of the wavelengths of the two optical recording media having substantially the same numerical aperture on the optical recording medium side and forming an incident light beam in a finite system with respect to the objective lens for the light of the remaining wavelength; and

a lens driving apparatus for tilting the objective lens in at least in one of a radial direction and a rotation direction of the optical recording medium so that the optical axis of the objective lens is tilted with respect to an incident beam.

15. The optical information processing apparatus as claimed in claim 14, **characterized by** further comprising:

a common aperture element situated on an optical path between the light source and the objective lens for providing a substantially equal beam diameter with respect to an incident beam on the objective lens for the light of the two wavelengths having substantially the same numerical aperture on the optical recording medium side.

**Patentansprüche**

1. Optische Informationsverarbeitungsvorrichtung zum Konvergieren und Ausstrahlen von Licht von Lichtquellen der Wellenlängen λ1 und λ2, mit λ1 < λ2, über eine Objektivlinse auf ein optisches Aufzeichnungsmedium durch erste bzw. zweite Substrate und zum Aufzeichnen, Auslesen oder Löschen von Information mit Bezug auf das optische Aufzeichnungsmedium, wobei die optische Informationsvetarbeitungsvorrichtung **gekennzeichnet ist durch**:

Erfühlen der Bedingungen

$$(1) \dots |CL1/CD1| \geq 1$$

$$(2) \dots |CL2/CD2| \geq 1,$$

worin CDx, x = 1, 2, der Wert eines jeden kleinsten Quadratfehlers, Einheit: λ rms, der Komafehlerkomponenten dritter Ordnung ist, die pro Winkel erzeugt werden, wenn die ersten und zweiten Substrate geneigt sind;

worin CLx, x = 1, 2, der Wert eines jeden kleinsten Quadratfehlers, Einheit: $\lambda$ rms, der Komafehlerkomponenten dritter Ordnung ist, die pro Winkel erzeugt werden, wenn die Objektivlinse während des Konvergierens und Ausstrahlens zum optischen Aufzeichnungsmedium geneigt ist; und

worin die Bedingungen (1) und (2) für einen einfallenden Lichtstrahl eines der Wellenlänge $\lambda 1$ entsprechenden blauen Wellenlängenbands und für einen einfallenden Lichtstrahl eines der Wellenlänge $\lambda 2$ entsprechenden roten Wellenlängenbands definiert sind.

2. Optische Informationsverarbeitungsvorrichtung nach Anspruch 1, **dadurch gekennzeichnet, dass** die Bedingungen (1) und (2) für einen einfallenden Lichtstrahl in einem unendlichen System mit Bezug auf das von der Lichtquelle der Wellenlänge $\lambda 1$ ausgestrahlte Licht definiert sind und für einen einfallenden Lichtstrahl in einem endlichen System mit Bezug auf das von der Lichtquelle der Wellenlänge $\lambda 2$ ausgestrahlte Licht definiert sind.

3. Optische Informationsverarbeitungsvorrichtung nach Anspruch 1, **dadurch gekennzeichnet, dass** sie außerdem Folgendes umfasst:

eine Lichtquelle der Wellenlänge $\lambda 3$ ;

Konvergieren und Ausstrahlen durch die optische Informationsverarbeitungsvorrichtung von Licht von Lichtquellen der Wellenlängen $\lambda 1$, $\lambda 2$ und $\lambda 3$, mit $\lambda 1 < \lambda 2$ $\lambda 3$, über die Objektivlinse auf ein optisches Aufzeichnungsmedium durch erste, zweite bzw. dritte Substrate und Aufzeichnen, Auslesen oder Löschen von Information mit Bezug auf das optische Aufzeichnungsmedium, wobei die optische Informationsverarbeitungsvorrichtung:

folgende Bedingungen erfüllt

$$(3) \dots |CL1/CD1| \geq 1$$

$$(4) \dots |CL2/CD2| \geq 1$$

$$(5) \dots |CL3/CD3| \geq 1,$$

worin CDx, x = 1, 2, 3, der Wert eines jeden kleinsten Quadratfehlers, $\lambda$ rms, der Komafehlerkomponenten dritter Ordnung ist, die pro Winkel erzeugt werden, wenn die ersten, zweiten und dritten Substrate geneigt sind;

worin CLx, x = 1, 2, 3, der Wert eines jeden kleinsten Quadratfehlers, $\lambda$ rms, der Komafehlerkomponenten dritter Ordnung ist, die pro Winkel erzeugt werden, wenn die Objektivlinse während des Konvergieren und Ausstrahlens zum optischen Aufzeiclmungsmedium geneigt ist;

und worin die Bedingungen (3), (4) und (5) für einen einfallenden Lichtstrahl eines der Wellenlänge $\lambda 1$ entsprechenden blauen Wellenlängenbands, für einen einfallenden Lichtstrahl eines der Wellenlänge $\lambda 2$ entsprechenden roten Wellenlängenbands und für einen einfallenden Lichtstrahl eines der Wellenlänge $\lambda 3$ entsprechenden infraroten Wellenlängenbands definiert sind.

4. Optische Informationsverarbeitungsvorrluhtung nach Anspruch 3, **dadurch gekennzeichnet, dass** die Bedingungen (3), (4) und (5) für einen einfallenden Lichtstrahl in einem unendlichen System mit Bezug auf das von der Lichtquelle der Wellenlänge $\lambda 1$ oder $\lambda 2$ ausgestrahlte Licht definiert sind, und für einen einfallenden Lichtstrahl in einem unendlichen System mit Bezug auf das von der Lichtquelle der Wellenlänge $\lambda 3$ ausgestrahlte Licht definiert sind.

5. Optische Informationsverarbeitungsvorrichtung nach Anspruch 3, **dadurch gekennzeichnet, dass** die Bedingungen (3), (4) und (5) für einen einfallenden Lichtstrahl in einem unendlichen System mit Bezug auf das von der Lichtquelle der Wellenlänge $\lambda 1$ ausgestrahlte Licht definiert sind, und für einen einfallenden Lichtstrahl in einem endlichen System mit Bezug auf das von der Lichtquelle der Wellenlänge $\lambda 2$ oder $\lambda 3$ ausgestrahlte Licht definiert sind.

6. Optische Informationsverarbeitungsvorrichtungslinse nach irgendeinem der Ansprüche 1 bis 5, **dadurch gekennzeichnet, dass** die Objektivlinse als eine Einzelelementlinse mit einer asphärischen Oberfläche mindestens auf einer Seite durch Glasformung oder Harzformung hergestellt ist:

worin die Objektivlinse folgende Bedingung erfüllt

$$(r2+r1)/(r2−r1) \geq 0,7$$

worin r1 der Krümmungsradius der Lichtquellenseite der Objektivlinse ist; und
worin r2 der Krümmungsradius der optischen Aufzeichnungsmediumseite der Objektivlinse ist.

7. Optische Informationsverarbeitungsvorrichtung nach irgendeinem der Ansprüche 1 bis 5, **dadurch gekennzeichnet, dass** die Objektivlinse eine Objektivlinse verkitteten Typs einer Gruppe mit zwei Elementen ist.

8. Optische Informationsverarbeitungsvorrichtung nach Anspruch 6 oder Anspruch 7, **dadurch gekennzeichnet, dass** die Objektivlinse mindestens auf einer Seite eine Brechungsebene oder eine Phasendifferenzebene hat.

9. Optische Infonnationsverarbeitungsvorrichtuug nach Anspruch 8, **dadurch gekennzeichnet, dass** die optische Achse der Objektivlinse mit Bezug auf einen einfallenden Strahl geneigt ist, worin die Objektivlinse auf eine Linsenantriebsvorrichtung montiert ist, um die Objektivlinse mindestens in eine von folgenden Richtungen zu neigen: eine Radialrichtung und eine Rotationsrichtung des optischen Aufzeichnungsmediums.

10. Optische Informationsverarbeitungsvorrichtung nach Anspruch 9, **dadurch gekennzeichnet, dass** sie außerdem Folgendes umfasst:

ein Winkeldetektiermittel zum Detektieren von mindestens zwei oder mehreren der Folgenden: dem Relativwinkel zwischen dem optischen Aufzeichnungsmedium und der Objektivlinse, dem Relativwinkel zwischen dem optischen Aufzeichnungsmedium und einer vorbestimmten Referenzfläche des optischen Abnehmers, und dem Relativwinkel zwischen der Objektivlinse und der vorbestimmten Referenzfläche des optischen Abnehmer; und ein Korrekturmittel zum Bereitstellen eines vorbestimmten Gewinns oder Offsets an jeweilige Relativwinkelsignale, die vom Winkeldetektiermittel gemäß der leuchtenden Lichtquelle detektiert werden.

11. Optische Informationsverarbeitungsvorrichtung nach Anspruch 9, **dadurch gekennzeichnet, dass** sie außerdem Folgendes umfasst:

ein Komafehlergröße-Detektiermittel zum Detektieren der Komafehlergröße, die gemäß dem Relativwinkel zwischen der Objektivlinse und dem optischen Aufzeichnungsmedium auftritt.

12. Optische Informationsverarbeitungsvorrichtung nach Anspruch 1, **dadurch gekennzeichnet, dass** sie außerdem Folgendes umfasst:

ein optisches System, das einen einfallenden Lichtstrahl in einem unendlichen System mit Bezug auf die Objektivlinse für eins der Folgenden formt: das Licht der Wellenlänge λ1 und der Wellenlänge λ2;
eine Linsenantriebsvorrichtung, auf die die Objektivlinse montiert ist, wobei die Linsenantriebsvorrichtung die Objektivlinse in mindestens eine von folgenden Richtungen neigt: eine Radialrichtung und eine Rotationsrichtung des optischen Aufzeichnungsmediums, sodass die optische Achse der Objektivlinse mit Bezug auf einen einfallenden Strahl geneigt ist; und
ein gemeinsames Aperturelement, das auf einem optischen Pfad zwischen der Lichtquelle und der Objektivlinse angeordnet ist, um einen im Wesentlichen gleichen Strahldurchmesser mit Bezug auf einen einfallenden Strahl auf die Objektivlinse für die zwei Wellenlängen λ1 und λ2 bereitzustellen;
worin die numerische Apertur auf der optischen Aufzeichnungsmediumseite der Objektivlinse für die Wellenlänge λ1 im Wesentlichen gleich der für die Wellenlänge λ2 ist.

13. Optische Informationsverarbeitungsvorrichtung nach Anspruch 3, **dadurch gekennzeichnet, dass** sie außerdem Folgendes umfasst:

ein optisches System, das einen einfallenden Lichtstrahl formt in einem unendlichen System mit Bezug auf die Objektivlinse für das Licht der Wellenlängen der zwei optischen Aufzeichnungsmedien mit im Wesentlichen derselben Substratdicke, und einen einfallenden Lichtstrahl formt in einem endlichen System mit Bezug auf die Objektivlinse für das Licht der verbleibenden Wellenlänge; und

eine Linsenantriebsvorrichtung zum Neigen der Objektivlinse in mindestens eine von folgenden Richtungen: eine Radialrichtung und eine Rotationsrichtung des optischen Aufzeicbnungsmediums, sodass die optische Achse der Objektivlinse mit Bezug auf einen einfallenden Strahl geneigt ist.

**14.** Optische Informationsverarbeitungsvorrichtung nach Anspruch 3, **dadurch gekennzeichnet, dass** sie außerdem Folgendes umfasst:

ein optisches System, das einen einfallenden Lichtstrahl formt in einem unendlichen System mit Bezug auf die Objektivlinse für das Licht der Wellenlängen der zwei optischen Aufzeichnungsmedien mit im Wesentlichen derselben numerischen Apertur auf der optischen Aufzeichnungsmediumseite, und einen einfallenden Lichtstrahl formt in einem endlichen System mit Bezug auf die Objektivlinse für das Licht der verbleibenden Wellenlänge; und

eine Linsenantriebsvorrichtung zum Neigen der Objektivlinse in mindestens eine von folgenden Richtungen: eine Radialrichtung und eine Rotationsrichtung des optischen Aufzeichnungsmediums, sodass die optische Achse der Objektivlinse mit Bezug auf einen einfallenden Strahl geneigt ist.

**15.** Optische Informationsverarbeitungsvorrichtung nach Anspruch 14, **dadurch gekennzeichnet, dass** sie außerdem Folgendes umfasst:

ein gemeinsames Aperturelement, das auf einem optischen Pfad zwischen der Lichtquelle und der Objektivlinse angeordnet ist, um einen im Wesentlichen gleichen Strahldurchmesser bereitzustellen mit Bezug auf einen einfallenden Strahl auf die Objektivlinse für das Licht der zwei Wellenlängen mit im Wesentlichen derselben numerischen Apertur auf der optischen Aufzeichnungsmediumseite.

## Revendications

**1.** Dispositif de traitement d'informations optiques pour faire converger et rayonner une lumière provenant de sources de lumière de longueurs d'onde $\lambda 1$ et $\lambda 2$, avec $\lambda 1 < \lambda 2$, par l'intermédiaire d'une lentille de focalisation, sur un support d'enregistrement optique à travers des premier et deuxième substrats, respectivement, et enregistrer, lire ou effacer des informations sur le support d'enregistrement optique, le dispositif de traitement d'informations optiques étant **caractérisé en ce que** :

les conditions suivantes sont satisfaites :

$$(1) \dots |CL1/CD1| \geq 1,$$

$$(2) \dots |CL2/CD2| \geq 1,$$

dans lequel CDx, x = 1, 2, est la valeur de chaque erreur des moindres carrés, unité : $\lambda$ efficace, des composantes d'aberration de coma de troisième ordre générées par angle lorsque les premier et deuxième substrats sont inclinés ;
dans lequel CLx, x = 1, 2, est la valeur de chaque erreur des moindres carrés, unité : $\lambda$ efficace, des composantes d'aberration de coma de troisième ordre générées par angle lorsque la lentille de focalisation est inclinée pendant la convergence et le rayonnement vers le support d'enregistrement optique ; et
dans lequel les conditions (1) et (2) sont définies pour un faisceau de lumière incident d'une bande de longueur d'onde bleue correspondant à la longueur d'onde $\lambda 1$ et pour un faisceau de lumière incident d'une bande de longueur d'onde rouge correspondant à la longueur d'onde $\lambda 2$.

**2.** Dispositif de traitement d'informations optiques selon la revendication 1, **caractérisé en ce que** les conditions (1) et (2) sont définies pour un faisceau de lumière incident dans un système infini par rapport à la lumière rayonnée à partir de la source de lumière à la longueur d'onde $\lambda 1$ et sont définies pour un faisceau de lumière incident dans un système fini par rapport à la lumière rayonnée à partir de la source de lumière à la longueur d'onde $\lambda 2$.

**3.** Dispositif de traitement d'informations optiques selon la revendication 1, **caractérisé en ce qu'**il comprend en outre :

une source de lumière à la longueur d'onde λ3 ;

le dispositif de traitement d'informations optiques faisant converger et rayonnant une lumière provenant de sources de lumière de longueurs d'onde, λ1, λ2 et λ3, avec λ1 < λ2 < λ3, par l'intermédiaire de la lentille de focalisation, sur un support d'enregistrement optique à travers des premier, deuxième et troisième substrats, respectivement, et enregistrant, lisant, ou effaçant des informations sur le support d'enregistrement optique, le dispositif de traitement d'informations optiques,

satisfaisant les conditions :

$$(3) \dots |CL1/CD1| \geq 1$$

$$(4) \dots |CL2/CD2| \geq 1$$

$$(5) \dots |CL3/CD3| \geq 1,$$

dans lequel CDx, x = 1, 2, 3, est la valeur de chaque erreur des moindres carrés, λ efficace, des composantes d'aberration de coma de troisième ordre générées par angle lorsque les premier, deuxième et troisième substrats sont inclinés;

dans lequel CLx, x = 1, 2, 3, est la valeur de chaque erreur des moindres carrées, λ efficace, des composantes d'aberration de coma de troisième ordre générées par angle lorsque la lentille de focalisation est inclinée pendant la convergence et le rayonnement vers le support d'enregistrement optique ;

et dans lequel les conditions (3), (4) et (5) sont définies pour un faisceau de lumière incident d'une bande de longueur d'onde bleue correspondant à la longueur d'onde λ1, pour un faisceau de lumière incident d'une bande de longueur d'onde rouge correspondant à la longueur d'onde λ2, et pour un faisceau incident d'une bande de longueur d'onde infrarouge correspondant à la longueur d'onde λ3.

**4.** Dispositif de traitement d'informations optiques selon la revendication 3, **caractérisé en ce que** les conditions (3), (4) et (5) sont définies pour un faisceau de lumière incident dans un système infini par rapport à la lumière rayonnée à partir de la source de lumière à la longueur d'onde λ1 ou λ2 et sont définies pour un faisceau de lumière incident dans un système infini par rapport à la lumière rayonnée à partir de la source de lumière à la longueur d'onde λ3.

**5.** Dispositif de traitement d'informations optiques selon la revendication 3, **caractérisé en ce que** les conditions (3), (4) et (5) sont définies pour un faisceau de lumière incident dans un système infini par rapport à la lumière rayonnée à partir de la source de lumière à la longueur d'onde λ1 et sont définies pour un faisceau de lumière incident dans un système fini par rapport à la lumière rayonnée à partir de la source de lumière à la longueur d'onde λ2 ou λ3.

**6.** Lentille de dispositif de traitement d'informations optiques selon l'une des revendications 1 à 5, **caractérisée en ce que** la lentille de focalisation est fabriquée en tant que lentille en un seul élément ayant une surface asphérique au moins d'un côté, par moulage de verre ou moulage de résine :

dans laquelle la lentille de focalisation satisfait à une condition :

$$(r2 + r1)/(r2 - r1) \geq 0,7$$

dans laquelle r1 est le rayon de courbure du côté source de lumière de la lentille de focalisation ; et
dans laquelle r2 est le rayon de courbure du côté support d'enregistrement optique de la lentille de focalisation.

**7.** Dispositif de traitement d'informations optiques selon l'une des revendications 1 à 5, **caractérisé en ce que** la lentille de focalisation est une lentille de focalisation du type à deux éléments collés d'un groupe.

**8.** Dispositif de traitement d'informations optiques selon la revendication 6 ou la revendication 7, **caractérisé en ce**

**que** la lentille de focalisation a un plan de diffraction ou un plan de différence de phase au moins d'un côté.

9. Dispositif de traitement d'informations optiques selon la revendication 8, **caractérisé en ce que** l'axe optique de la lentille de focalisation est incliné par rapport à un faisceau incident, dans lequel la lentille de focalisation est montée sur un dispositif d'entraînement de lentille pour incliner la lentille de focalisation au moins dans l'une d'une direction radiale et d'une direction de rotation du support d'enregistrement optique.

10. Dispositif de traitement d'informations optiques selon la revendication 9, **caractérisé en ce qu'**il comprend en outre :

   un moyen de détection d'angle pour détecter au moins deux, ou plus, de l'angle relatif entre le support d'enregistrement optique et la lentille de focalisation, de l'angle relatif entre le support d'enregistrement optique et une surface de référence prédéterminée de la tête de lecture optique, et de l'angle relatif entre la lentille de focalisation et la surface de référence prédéterminée de la tête de lecture optique ; et
   un moyen de correction pour fournir un gain ou un décalage prédéterminé à des signaux d'angle relatif respectifs détectés par un moyen de détection d'angle en fonction de la source de lumière qui est active.

11. Dispositif de traitement d'informations optiques selon la revendication 9, **caractérisé en ce qu'**il comprend en outre :

   un moyen de détection de quantité d'aberration de coma pour détecter une quantité d'aberration de coma apparaissant en fonction de l'angle relatif entre la lentille de focalisation et le support d'enregistrement optique.

12. Dispositif de traitement d'informations optiques selon la revendication 1, **caractérisé en ce qu'**il comprend en outre :

   un système optique formant un faisceau de lumière incident dans un système infini par rapport à la lentille de focalisation pour l'une quelconque des lumières aux longueurs d'onde $\lambda 1$ et $\lambda 2$ ;
   un dispositif d'entraînement de lentille sur lequel la lentille de focalisation est montée, le dispositif d'entraînement de lentille inclinant la lentille de focalisation dans au moins l'une d'une direction radiale et d'une direction de rotation du support d'enregistrement optique de sorte que l'axe optique de la lentille de focalisation soit incliné par rapport à un faisceau incident ; et
   un élément d'ouverture commun situé sur un trajet optique entre la source de lumière et la lentille de focalisation pour obtenir un diamètre de faisceau sensiblement égal par rapport à un faisceau incident sur la lentille de focalisation pour les deux longueurs d'onde $\lambda 1$ et $\lambda 2$ ;
   dans lequel l'ouverture numérique du côté support d'enregistrement optique de la lentille de focalisation pour la longueur d'onde $\lambda 1$ est sensiblement identique à celle pour la longueur d'onde $\lambda 2$.

13. Dispositif de traitement d'informations optiques selon la revendication 3, **caractérisé en ce qu'**il comprend en outre :

   un système optique formant un faisceau de lumière incident dans un système infini par rapport à la lentille de focalisation pour la lumière aux longueurs d'onde des deux supports d'enregistrement optique ayant sensiblement la même épaisseur de substrat et formant un faisceau de lumière incident dans un système fini par rapport à la lentille de focalisation pour la lumière à la longueur d'onde restante ; et
   un dispositif d'entraînement de lentille pour incliner la lentille de focalisation dans au moins l'une d'une direction radiale et d'une direction de rotation du support d'enregistrement optique de sorte que l'axe optique de la lentille de focalisation soit incliné par rapport à un faisceau incident.

14. Dispositif de traitement d'informations optiques selon la revendication 3, **caractérisé en ce qu'**il comprend en outre :

   un système optique formant un faisceau de lumière incident dans un système infini par rapport à la lentille de focalisation pour la lumière aux longueurs d'onde des deux supports d'enregistrement optique ayant sensiblement la même ouverture numérique du côté support d'enregistrement optique et formant un faisceau de lumière incident dans un système fini par rapport à la lentille de focalisation pour la lumière à la longueur d'onde restante ; et
   un dispositif d'entraînement de lentille pour incliner la lentille de focalisation dans au moins l'une d'une direction radiale et d'une direction de rotation du support d'enregistrement optique de sorte que l'axe optique de la lentille de focalisation soit incliné par rapport à un faisceau incident.

15. Dispositif de traitement d'informations optiques selon la revendication 14, **caractérisé en ce qu'**il comprend en outre :

un élément d'ouverture commun situé sur un trajet optique entre la source de lumière et la lentille de focalisation pour obtenir un diamètre de faisceau sensiblement égal par rapport à un faisceau incident sur la lentille de focalisation pour la lumière aux deux longueurs d'onde ayant sensiblement la même ouverture numérique du côté support d'enregistrement optique.

# FIG.1

Legend:
- ● BLUE LENS TILT OF 1 deg.
- ▲ DVD LENS TILT OF 1 deg.
- ▨ CD LENS TILT OF 1 deg.

Y-axis: COMA ABERRATION WITH LENS TILT OF 1 deg. [$\lambda$ rms]

X-axis: $Q = (r2+r1)/(r2-r1)$

LENS 1 (CONVENTIONAL LENS)

LENS 2

LENS 3 (EMBODIMENT 1)

LENS 4 (EMBODIMENT 2)

EP 1 667 134 B1

# FIG.2

(a)

STO(ENTRANCE PUPIL)
2A
1a
S2
S3
S4
IMG

(b)

STO(ENTRANCE PUPIL)
2A
1b
S2
S3
S4
IMG

(c)

STO(ENTRANCE PUPIL)
2A
1c
S2
S3
S4
IMG

FIG.3

(a)

(b)

(c)

(d)

FIG.4

FIG.5

EP 1 667 134 B1

# FIG.6

(a)

STO(ENTRANCE PUPIL)      2B      1a

S2   S3   S4   IMG

(b)

STO(ENTRANCE PUPIL)      2B      1b

S2   S3   S4   IMG

(c)

STO(ENTRANCE PUPIL)      2B      1c

S2   S3   S4   IMG

35

FIG.7

(a)

(b)

(c)

(d)

EP 1 667 134 B1

FIG.8

FIG.9

# FIG.10

(a)

STO(ENTRANCE PUPIL)

2C  S4  1a

IMG

S2  S5

(b)

STO(ENTRANCE PUPIL)

2C  S4  1b

IMG

S2  S5

(c)

STO(ENTRANCE PUPIL)

2C  S4  1c

IM(

S2  S5

FIG.11

(a)

(b)

(c)

(d)

(a)

(b)

(c)

(d)

FIG.12

EP 1 667 134 B1

# FIG.13

(a)

(b)

(c)

# FIG.14

# FIG.15

EP 1 667 134 B1

# FIG.16

TANGENTIAL TILT DIRECTION    RADIAL TILT DIRECTION

TRACKING DIRECTIOI

FOCUS DIRECTION

# FIG.17

# FIG.18

OPTICAL RECORDING MEDIUM TILT SIGNAL

RELATIVE TILT SIGNAL

OBJECTIVE LENS TILT SIGNAL

# FIG.19

55c  55e

55

55d  55f

RADIAL TILT
DIRECTION

TANGENTIAL
TILT DIRECTION

# FIG.20

TRACK PITCH

81

θ

1

r

1st ORDER
DIFFRACTED BEAM

2

OVERLAPPING PORTION O
1st ORDER DIFFRACTED
BEAM AND 0th ORDER
DIFFRACTED BEAM

# FIG.21

INTERFERENCE REGION 82

# FIG.22

| 0 | 0.17deg | 0.33deg | 0.50deg | 0.67deg | 0.83deg |
|---|---------|---------|---------|---------|---------|
| | | | | | |

# FIG.23

| 0 | 0.17deg | 0.33deg | 0.50deg |
|---|---|---|---|

# FIG.24

~83

# FIG.25

# FIG.26

# FIG.27

# FIG.28

# FIG.29

# FIG.30

(a)

(b)

(c)

# FIG.31

(a)

(b)

(c)

EP 1 667 134 B1

FIG.32

56

EP 1 667 134 B1

# FIG.33

221c

221d

221

221a

221b

57

# FIG.34

(a)

DISK TILT : DVD INFINITE SYSTEM

(b)

LENS TILT : DVD INFINITE SYSTEM

(c)

# FIG.35

EP 1 667 134 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002107617 A
- US 6490100 B